# EUROPÄISCHE PATENTSCHRIFT

(11) **EP 3 928 198 B1**
(45) Veröffentlichungstag und Bekanntmachung des Hinweises auf die Patenterteilung: **25.06.2025**
(21) Anmeldenummer: 20704326.6
(22) Anmeldetag: 18.02.2020
(51) Int. Cl.: G06F 8/65, H01R 13/22, H01R 24/00, H01R 13/64

(54) **SYSTEM UND VERFAHREN ZUR ÜBERTRAGUNG EINES BETRIEBSSOFTWARE-UPDATES AUF EIN SICHERHEITSGERICHTETES GERÄT**
SYSTEM AND METHOD FOR TRANSFERRING AN OPERATING SOFTWARE UPDATE TO A SECURITY-ORIENTED DEVICE
SYSTÈME ET PROCÉDÉ POUR LA TRANSMISSION D'UNE MISE À JOUR DE LOGICIEL D'EXPLOITATION SUR UN APPAREIL SÉCURISÉ

(30) Priorität: 18.02.2019 BE 201905103
(43) Veröffentlichungstag der Anmeldung: 29.12.2021
(73) Patentinhaber: PHOENIX CONTACT GMBH & CO. KG, 32825 Blomberg (DE)
(72) Erfinder: RAHLVES, Lutz, 31789 Tündern (DE); KERSCHER, Dominik, 32107 Bad Salzuflen (DE)
(74) Vertreter: Blumbach · Zinngrebe Patentanwälte PartG mbB
(86) Internationale Anmeldenummer: PCT/EP2020/054175
(87) Internationale Veröffentlichungsnummer: WO 2020/169565

(56) Entgegenhaltungen:
- WO-A1-2017/013134
- WO-A1-2017/013134
- US-A1- 2011 256 024
- US-A1- 2011 256 024
- US-A1- 2015 050 678
- US-A1- 2015 050 678

## Beschreibung

Die vorliegende Erfindung betrifft ein System umfassend ein sicherheitsgerichtetes Gerät, insbesondere ein sicherheitsgerichtetes Eingabe-/Ausgabemodul oder eine sicherheitsgerichtete Steuerungseinrichtung, und ein davon getrenntes elektronisches Speichergerät, in welchem genau ein Dateninhalt für das Gerät gespeichert ist, sowie ein Verfahren zur Übertragung von genau einem Dateninhalt von einem elektronischen Speichergerät auf ein sicherheitsgerichtetes Gerät innerhalb dieses Systems.

Zur Reduzierung eines Risikos für Mensch oder Umwelt bei automatisierten Prozessen, Maschinen und Anlagen müssen Sicherheitsfunktionen realisiert werden, wie z.B. die Abschaltung einer Maschine nach Drücken eines Not-Aus-Tasters oder die Überführung der Anlage in den sicheren Zustand nach Erkennen eines Fehlers. Hier werden zunehmend fehlersichere Automatisierungssysteme innerhalb der automatisierten Prozesse, Maschinen und Anlagen eingesetzt. Im Allgemeinen realisieren diese fehlersicheren Automatisierungssysteme einerseits die eigentliche Sicherheitsfunktion, wie z.B. Not-Aus, Zweihand-Schaltung, Betriebsartenwahlschalter, oder ähnliches, und andererseits auch fehlererkennende und -beherrschende Maßnahmen nach z.B. in Standards wie IEC 61508, ISO 13849 und anderen festgelegten Mechanismen, welche dem aktuellen Stand der Technik entsprechen. Ist durch geeignete Maßnahmen gewährleistet, dass ein elektrisches, elektronisches und/oder programmierbar elektronisches System, aber auch ein einzelnes Teilsystem-Modul oder auch eine einzelne Hardware- und/oder Software-Komponente eine bestimmte Sicherheitsfunktion wirksam erfüllt, gilt dieses System bzw. das jeweilige Teilsystem-Modul im Rahmen der nachfolgenden Beschreibung und der Ansprüche als sicher oder sicherheitsgerichtet.

Sicherheitsgerichtete Geräte, beispielsweise sicherheitsgerichtete Eingabe-/Ausgabemodule und Steuerungseinrichtungen einer Maschine oder Anlage, die einen oder mehrere integrierte Prozessoren und auch Steuerungen umfassen, verfügen in der Regel über ein Betriebssystem. Um dieses Betriebssystem auf dem aktuellen Stand zu halten und insbesondere um Fehler in dem Betriebssystem zu beseitigen oder die Funktionalität des jeweiligen sicherheitsgerichteten Geräts zu erweitern, ist es erforderlich, dass ein Betriebssoftware-Update auf die sicherheitsgerichteten Geräte ladbar ist, welches von dem jeweiligen sicherheitsgerichteten Gerät aus gestartet werden kann.

Bei manchen sicherheitsgerichteten Geräten z.B. bei zumindest manchen Modulen der Schutzart IP20, muss das Gehäuse des Geräts geöffnet werden und mit speziellen Programmieradaptern ein neues Betriebssystem in dem Gerät aufgespielt werden. Dies ist meist nur direkt beim Hersteller des entsprechenden Geräts möglich und kann nicht vor Ort beim Anwender des Eingabe-/Ausgabemoduls erfolgen. Insbesondere bei Eingabe-/Ausgabemodulen der Schutzart IP67 stellt dies jedoch ein Problem dar, da diese Eingabe-/Ausgabemodule nicht geöffnet werden können. Im Falle des Erkennens eines Fehlers des Betriebssystems oder im Falle einer erforderlichen Aktualisierung des Betriebssystems kommt somit lediglich ein Austauschen dieser Eingabe-/Ausgabemodule durch neue Eingabe-/Ausgabemodule mit entsprechend aktualisiertem Betriebssystem und ein Verschrotten der Eingabe-/Ausgabemodule mit nicht aktualisiertem Betriebssystem in Frage.

Im Bereich der funktionalen Sicherheitstechnik muss darüber hinaus sichergestellt sein, dass bei der Aktualisierung des Betriebssystems im Rahmen eines Updates auch die für das entsprechende Gerät geeignete Version des Betriebssoftware-Updates verwendet wird. Unter allen Umständen muss vermieden werden, dass eine falsche Version eines Betriebssoftware-Updates oder ein nicht für das entsprechende Gerät geeignetes Betriebssoftware-Update auf dem entsprechenden Gerät installiert wird.

Um dies sicherzustellen, offenbart die EP 1 532 494 B1 u.a. ein Verfahren zum Aufspielen eines neuen Betriebssystems auf eine Sicherheitssteuerung sowie ein entsprechendes Betriebsprogramm, bei welchem ein Anwender und nicht der Hersteller ein neues Betriebsprogramm, d.h. eine neue Firmware, selbstständig auf eine vorhandene Sicherheitssteuerung aufspielt. Die Kontrolle des Herstellers über die Sicherheitseinrichtung bleibt mit Hilfe einer speziellen Freigabeinformation aufrechterhalten, denn die Übernahme eines neuen Betriebsprogramms erfolgt nur dann, wenn diese Übernahme in der Freigabeinformation von Seiten des Herstellers freigegeben ist. Somit kann mit Hilfe des in der EP 1 532 494 B1 offenbarten Verfahrens überprüft werden, ob das neue Betriebsprogramm die für die jeweilige Sicherheitssteuerung geeignete Version ist.

Aus der US 2015/0050678 A1 ist ein Analysemessgerät bekannt, welches ein Gehäuse und ein mit dem Gehäuse elektrisch und mechanisch verbindbares Analysemodul aufweist. Das Analysemodul weist einen Speicher auf, in dem Firmware-Updates für verschiedene Messgeräte gespeichert sein können. Das Analysemodul kann mit dem Gehäuse verschiedener Analysemessgeräte lösbar verbunden werden, um das entsprechende Firmware-Update zu dem jeweiligen Gehäuse zu übertragen.

Eine Aufgabe der vorliegenden Erfindung ist es, ein System umfassend ein sicherheitsgerichtetes Gerät und ein davon getrenntes elektronisches Speichergerät sowie ein Verfahren bereitzustellen, bei welchen ein für das Gerät bestimmter Dateninhalt, insbesondere ein Betriebssoftware-Update, in der für das Gerät geeigneten Version gegenüber dem Stand der Technik auf eine alternative, vereinfachte und verbesserte Weise auf das Gerät übertragbar ist.

Wie eingangs bereits erwähnt, handelt es sich im Rahmen der vorliegenden Erfindung bei einem sicherheitsgerichteten bzw. sicherheitsbezogenen Gerät vorzugsweise um ein sicherheitsgerichtetes Eingabe-/Ausgabemodul oder eine sicherheitsgerichtete Steuerungseinrichtung, die sicherheitsbezogene Eingangssignale und/oder sicherheitsbezogene Ausgangssignale erzeugen oder auf sicherheitsbezogene Eingangssignale reagieren, um auf dem Gebiet der funktionalen Sicherheit sicherheitsbezogene Steuerungsfunktionen auszuführen. Detailliert wird die funktionale Sicherheit beispielsweise in dem Fachbuch von Patrick Gehlen "Funktionale Sicherheit von Maschinen und Anlagen, Umsetzung der europäischen Maschinenrichtlinie in der Praxis, 2. überarbeitete Auflage, 2010, Publicis Publishing Verlag" beschrieben.

Die Aufgabe der vorliegenden Erfindung wird durch die Merkmale des Anspruchs 1 gelöst und durch die Merkmale der abhängigen Ansprüche ausgestaltet und weiterentwickelt.

Demgemäß ist ein System vorgesehen, welches ein sicherheitsgerichtetes Gerät und ein davon getrenntes elektronisches Speichergerät umfasst, in welchem genau ein Dateninhalt für das Gerät gespeichert ist. Der genau eine Dateninhalt ist entweder ein Betriebssoftware-Update oder eine Adresse. Bei der Adresse handelt es sich vorzugsweise um eine Sicherheitsadresse. Das elektronische Speichergerät weist eine erste Verbindungseinrichtung zum mechanischen und elektrischen Koppeln mit dem sicherheitsgerichteten Gerät, wobei die erste Verbindungseinrichtung ein erstes mechanisches Kodierungsmittel umfasst. Das sicherheitsgerichtete Gerät weist eine Speichereinrichtung, in welcher ein Betriebssystem gespeichert ist, einen Mikrocontroller und eine zweite Verbindungseinrichtung zum mechanischen und elektrischen Koppeln mit dem elektronischen Speichergerät auf, wobei die zweite Verbindungseinrichtung ein zweites mechanisches Kodierungsmittel umfasst. Das erste mechanische Kodierungsmittel und das zweite mechanische Kodierungsmittel sind komplementär zueinander ausgebildet. Der Mikrocontroller des Geräts ist dazu ausgebildet zu erkennen, ob das elektronische Speichergerät über dessen erste Verbindungseinrichtung an der zweiten Verbindungseinrichtung des Geräts angeschlossen ist. Ist dies der Fall, so ist der Mikrocontroller ferner dazu ausgebildet, den genau einen in dem elektronischen Speichergerät gespeicherten Dateninhalt von dem elektronischen Speichergerät in die Speichereinrichtung des Geräts herunterzuladen.

Ein sicherheitsgerichtetes Gerät, welches insbesondere ein sicherheitsgerichtetes Eingabe-/Ausgabemodul oder eine sicherheitsgerichtete Steuerungseinrichtung sein kann, weist im Rahmen der Erfindung insbesondere eine Firmware bzw. ein Betriebssystem auf, welches gelegentlich ein Update benötigt. Weiterhin kann das sicherheitsgerichtete Gerät auch beispielsweise ein Laserscanner, ein Frequenzumrichter oder ein Lichtgitter sein.

Im Gegensatz zu dem Stand der Technik kommt zum Aktualisieren eines Betriebssystems ein elektronisches Speichergerät zum Einsatz, auf dem nur genau ein Dateninhalt, der entweder ein Betriebssoftware-Update oder eine Adresse ist, gespeichert ist. Ist der genau eine Dateninhalt eine Adresse, so wird diese Adresse, die der Kommunikation des sicherheitsgerichteten Geräts beispielsweise mit weiteren Gerät in einer Netzwerkinfrastruktur dient, einmalig in die Speichereinrichtung des Geräts heruntergeladen. Mit anderen Worten: Mittels der Adresse kann das sicherheitsgerichtete Gerät von anderen Geräten gezielt angesprochen werden. Ist der genau eine Dateninhalt ein Betriebssoftware-Update, so entspricht dieses Betriebssoftware-Update stets einer bestimmten Version, die für das Gerät geeignet und bestimmt ist. Da auf dem elektronischen Speichergerät nur ein Dateninhalt und somit nur ein einziges Betriebssoftware-Update gespeichert ist und mechanische Kodierungsmittel zum Einsatz kommen, kann im Gegensatz zu einem elektronischen Speichergerät mit beispielsweise einer Vielzahl von darauf gespeicherten Versionen eines Betriebssoftware-Updates ausgeschlossen werden, dass irrtümlich, beispielsweise durch Verwechslung, oder sogar absichtlich, eine falsche Version des Betriebssoftware-Updates von dem elektronischen Speichergerät auf das Gerätübertragen wird.

Zudem sieht das System vor, dass die erste Verbindungseinrichtung des elektronischen Speichergeräts ein erstes mechanisches Kodierungsmittel und die zweite Verbindungseinrichtung des sicherheitsgerichteten Geräts ein zweites mechanisches Kodierungsmittel umfasst, wobei das erste und zweite mechanische Kodierungsmittel komplementär zueinander ausgestaltet sind. Dies hat den Vorteil, dass ein elektrisches Koppeln des elektronischen Speichergeräts mit dem Gerät, und folglich ein Übertragen des genau einen Dateninhalts von dem elektronischen Speichergerät auf das Gerät, insbesondere nur dann erfolgt, wenn das erste und zweite mechanische Kodierungsmittel entsprechend komplementär zueinander ausgestaltet sind und demzufolge das elektronische Speichergerät mit dem Gerät über deren jeweilige mechanische Kodierungsmittel mechanisch korrekt gekoppelt ist. Eine korrekte mechanische Kopplung bedeutet, dass das erste mechanische Kodierungsmittel mit dem zweiten mechanischen Kodierungsmittel in der dafür vorgesehenen und angedachten Weise mechanisch gekoppelt ist und insbesondere kein gewaltsames Koppeln des ersten mechanischen Kodierungsmittels mit dem zweiten mechanischen Kodierungsmittel entgegen der beabsichtigten und angedachten Weise erfolgt. Mit anderen Worten: Die mechanischen Kodiermittel stellen sicher, dass nur genau die zum jeweiligen Gerätgehörende bzw. passende elektronische Speichereinrichtung mit diesem Gerätverbunden werden kann.

Bedingt durch den genau einen auf dem elektronischen Speichergerät gespeicherten Dateninhalt in Kombination mit der erfindungsgemäßen mechanischen Kodierung kann insbesondere auf einfache Weise sichergestellt werden, dass sowohl die richtige als auch die für das Gerät geeignete Version eines Betriebssoftware-Updates von dem elektronischen Speichergerät auf das Gerät übertragbar ist. So kann beispielsweise durch die mechanische Kodierung eine Identifizierbarkeit des Geräts gewährleistet werden, sodass auf dem elektronischen Speichergerät stets nur ein für das Betriebssystem des Geräts geeignetes Betriebssoftware-Update gespeichert ist. Dadurch, dass nur ein einziger Dateninhalt, und somit insbesondere nur ein einziges Betriebssoftware-Update, auf dem Gerätgespeichert ist, kann zudem sichergestellt werden, dass dieses Betriebssoftware-Update auch in der für das Gerät richtigen Version vorliegt.

Der Mikrocontroller des Geräts ist dazu eingerichtet und ausgebildet, das Gerät zu steuern und zu kontrollieren. Im Hinblick auf die Übertragung eines Dateninhalts von dem elektronischen Speichergerät auf das Gerät muss der Mikrocontroller lediglich derart eingerichtet und ausgebildet sein, dass er erkennt, ob das elektronische Speichergerät an die zweite Verbindungseinrichtung des Geräts angeschlossen ist. Ist dies der Fall, so muss der Mikrocontroller dazu eingerichtet und ausgebildet sein, den auf dem elektronischen Speichergerät gespeicherten Dateninhalt in die Speichervorrichtung des Geräts herunterzuladen. So ist beispielsweise eine automatische Überprüfung durch den Mikrocontroller, ob der Dateninhalt und insbesondere das Betriebssoftware-Update der richtige und geeignete Dateninhalt bzw. das richtige und geeignete Betriebssoftware-Update für das Gerät ist, nicht erforderlich. Da der Mikrocontroller im Hinblick auf die Übertragung eines Dateninhalts, insbesondere eines Betriebssoftware-Updates, nicht komplex ausgebildet sein muss, senkt dies die Kosten für den Mikrocontroller und somit für das Gerät.

Der Prozess des Herunterladens eines Betriebssoftware-Updates läuft bei dem erfindungsgemäßen System aus elektronischem Speichergerät und Gerät automatisch ab, ohne dass beispielsweise eine Freigabeinformation wie in der EP 1 532 494 B1 oder ein Freischaltcode überprüft werden muss oder ein Anwender angeben muss, welches Betriebssoftware-Update heruntergeladen werden soll. Das System aus elektronischem Speichergerät und Gerät ist im Vergleich zu dem eingangs genannten Stand der Technik somit weniger komplex und dadurch kostengünstig und auch weniger fehleranfällig, was insbesondere im Bereich der funktionalen Sicherheit ein wichtiger Gesichtspunkt ist.

Vorzugsweise weist das Gerät einen Sensor auf, welcher dazu ausgebildet ist zu erkennen, ob das elektronische Speichergerät mit dem Gerät korrekt mechanisch gekoppelt ist.

In einer Ausführungsform der Erfindung ist der Sensor des Geräts ein Berührungssensor, der dazu ausgebildet ist, ein elektrisches Signal an den Mikrocontroller zu senden, welches signalisiert, dass das elektronische Speichergerät mit dem Gerät korrekt mechanisch gekoppelt ist. Sobald der Mikrocontroller von dem Berührungssensor das Signal erhält, dass eine korrekte mechanische Kopplung zwischen elektronischem Speichergerät und Gerät vorliegt, lädt der Mikrocontroller den im elektronischen Speichergerät gespeicherten genau einen Dateninhalt in die Speichervorrichtung des Geräts herunter.

Der Berührungssensor kann ferner ein beispielsweise optisches Signal anzeigen oder akustisches Signal auslösen, welches signalisiert, ob das elektronische Speichergerät mit dem Gerät korrekt mechanisch gekoppelt ist. So kann beispielsweise eine mit dem Berührungssensor elektrisch gekoppelte LED grünes Licht anzeigen, wenn eine korrekte mechanische Kopplung zwischen elektronischem Speichergerät und Gerät vorliegt, und rotes Licht anzeigen, wenn keine korrekte mechanische Kopplung zwischen elektronischem Speichergerät und Gerät vorliegt. Dadurch kann dem Anwender frühzeitig angezeigt werden, dass eine Übertragung des genau einen Dateninhalts, welches für das Gerät bestimmt ist, von dem elektronischen Speichergerät auf das Gerät aufgrund einer fehlenden korrekten mechanischen Kopplung zwischen elektronischem Speichergerät und Gerät nicht stattfindet.

In einer Ausführungsform der Erfindung weist das erste mechanische Kodierungsmittel eine erste definierte mechanische Ausgestaltung und das zweite mechanische Kodierungsmittel weist eine zweite definierte mechanische Ausgestaltung auf, welche komplementär zur ersten definierten mechanischen Ausgestaltung ist. Die erste und zweite definierte mechanische Ausgestaltung kann beliebig geometrisch ausgestaltet sein. So kann es sich dabei beispielsweise um eine Riffelung oder eine Vielzahl von Riffelungen oder ein ausgeprägtes Raster bzw. Muster auf zumindest einem Teil einer im elektrisch und mechanisch gekoppelten Zustand des elektronischen Speichergeräts mit dem Gerät zu dem Gerät bzw. dem elektronischen Speichergerät hingewandten Fläche des elektronischen Speichergeräts bzw. des Geräts handeln. Auch kann die erste und zweite definierte mechanische Ausgestaltung in Form von einem oder mehreren von dieser besagten Fläche des elektronischen Speichergeräts bzw. des Geräts hervorragenden Element bzw. Elementen wie Stifte, Quader, Prismen u.v.m., oder entsprechend komplementär dazu geformten Ausnehmungen oder auch einer Kombination von hervorragenden Elementen und Ausnehmungen vorliegen.

Gemäß einer vorteilhaften Weiterentwicklung der vorliegenden Erfindung kann das elektronische Speichergerät eine Dateninhalt-Kennung speichern, welche angibt, ob der genau eine, im elektronischen Speichergerät gespeicherte Dateninhalt ein Betriebssoftware-Update oder eine Adresse für das sicherheitsgerichtete Gerät ist. Hierfür kann der Mikrocontroller dazu ausgebildet sein, für den Fall, dass das elektronische Speichergerät über dessen erste Verbindungseinrichtung an der zweiten Verbindungseinrichtung des Geräts angeschlossen ist, zuerst die Dateninhalt-Kennung aus dem elektronischen Speichergerät auszulesen und zu interpretieren und anschließend in Abhängigkeit von der interpretierten Dateninhalt-Kennung das Betriebssoftware-Update oder die Adresse in die Speichereinrichtung herunterzuladen und vorzugsweise dort zu starten.

Die Adresse dient der Kommunikation des sicherheitsgerichteten Geräts beispielsweise mit weiteren Eingabe-/Ausgabemodulen in einer Netzwerkinfrastruktur und wird von dem Mikrocontroller einmalig in die Speichereinrichtung des Geräts heruntergeladen.

Darüber hinaus bezieht sich die vorliegende Erfindung auch auf ein Verfahren zur Übertragung von genau einem Dateninhalt von einem elektronischen Speichergerät auf ein sicherheitsgerichtetes Gerät innerhalb des erfindungsgemäßen Systems wie zuvor beschrieben. Zunächst wird das Gerät im Rahmen des erfindungsgemäßen Verfahrens von einer Spannungsversorgung getrennt. Im spannungslosen bzw. stromlosen Zustand des Geräts wird die erste Verbindungseinrichtung des elektronischen Speichergeräts mit der zweiten Verbindungseinrichtung des Geräts elektrisch und mechanisch gekoppelt, wobei eine elektrische Kopplung nur bei korrekter mechanischer Kopplung des ersten Kodierungsmittels mit dem zweiten Kodierungsmittel erfolgt. Nach dem Anschließen des Geräts an die Spannungsversorgung erkennt der Mikrocontroller des Geräts vorzugsweise im Hochlaufen des Geräts, ob das elektronische Speichergerät an der zweiten Verbindungseinrichtung des Geräts angeschlossen ist. Wenn dies der Fall ist, so lädt der Mikrocontroller den genau einen in dem elektronischen Speichergerät gespeicherten Dateninhalt von dem elektronischen Speichergerät in die Speichereinrichtung des Geräts herunter. Anschließend wird das elektronische Speichergerät elektrisch und mechanisch von dem Gerät entkoppelt.

Vorzugsweise kann der Mikrocontroller bei dem zuvor beschriebenen Verfahren ferner erkennen, ob das elektronische Speichergerät an das Gerät zum ersten Mal angeschlossen worden ist. Ist dies der Fall, so interpretiert der Mikrocontroller den genau einen Dateninhalt des elektronischen Speichergeräts als Adresse. Ist dies jedoch nicht der Fall, so interpretiert der Mikrocontroller den genau einen Dateninhalt des elektronischen Speichergeräts als Betriebssoftware-Update.

Hierzu kann das elektronische Speichergerät eine Dateninhalt-Kennung speichern, welche angibt, ob der genau eine, im elektronischen Speichergerät gespeicherte Dateninhalt ein Betriebssoftware-Update oder eine Adresse für das sicherheitsgerichtete Gerät ist, wobei vor dem Herunterladen des genau einen in dem elektronischen Speichergerät gespeicherten Dateninhalts von dem elektronischen Speichergerät in die Speichereinrichtung des Geräts die Dateninhalt-Kennung durch den Mikrocontroller aus dem elektronischen Speichergerät ausgelesen und interpretiert wird, wobei anschließend, insbesondere unter Steuerung des Mikrocontrollers, in Abhängigkeit von der interpretierten Dateninhalt-Kennung das Betriebssoftware-Update oder die Adresse in die Speichereinrichtung heruntergeladen wird und vorzugsweise dort auch gestartet wird.

Die Erfindung wird nachfolgend anhand einiger Ausführungsbeispiele in Verbindung mit den beiliegenden Zeichnungen näher erläutert. Es zeigen:
- Figur 1: ein beispielhaftes System aus einem elektronischen Speichergerät und einem sicherheitsgerichteten Gerät gemäß einer ersten Ausführungsform,
- Figur 2: ein beispielhaftes System aus einem elektronischen Speichergerät und einem sicherheitsgerichteten Gerät gemäß einer zweiten Ausführungsform,
- Figur 3: ein beispielhaftes System aus einem elektronischen Speichergerät und einem sicherheitsgerichteten Gerät gemäß einer dritten Ausführungsform und
- Figur 4: ein beispielhaftes System aus einem elektronischen Speichergerät und einem sicherheitsgerichteten Gerät gemäß einer vierten Ausführungsform.

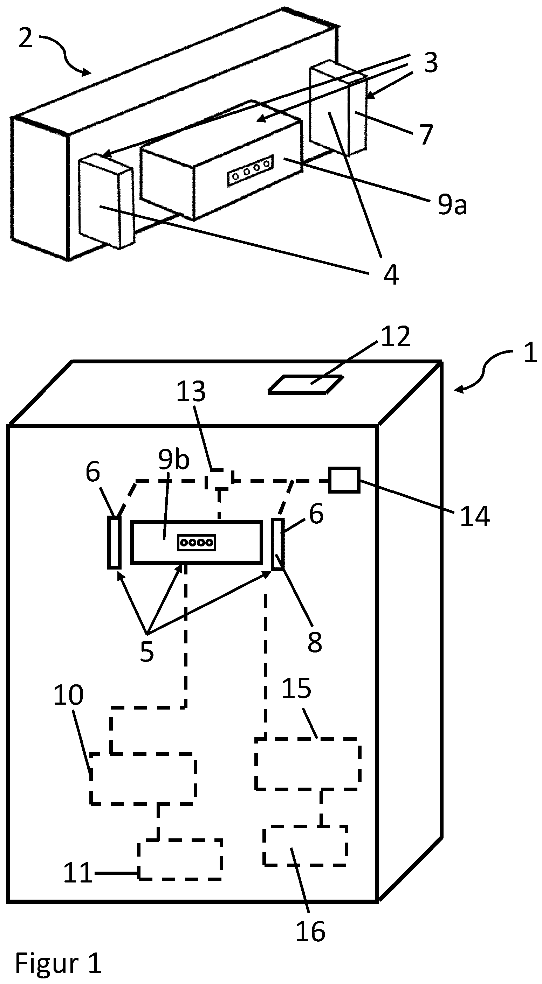

Figur 1 zeigt skizzenhaft und nicht maßstabsgetreu eine erste Ausführungsform eines Systems, umfassend ein sicherheitsgerichtetes Gerät 1, und zwar im vorliegenden Fall beispielhaft ein sicherheitsgerichtetes Eingabe-/Ausgabemodul (in Figur 1 unten) und ein davon getrenntes elektronisches Speichergerät 2 (in Figur 1 oben). Gemäß einer beispielhaften Ausführung ist in dem elektronischen Speichergerät 2 ein erster, vorzugsweise genau ein Dateninhalt gespeichert, der für das sicherheitsgerichtete Eingabe-/Ausgabemodul 1 bestimmt ist (nicht in Figur 1 gezeigt), wobei der genau eine Dateninhalt entweder ein Betriebssoftware-Update oder eine Adresse für das Eingabe-/Ausgabemodul 1 ist.

Das elektronische Speichergerät 2 in Figur 1 weist eine erste Verbindungseinrichtung 3 zum mechanischen und elektrischen Koppeln mit dem Eingabe-/Ausgabemodul 1 und das in Figur 1 dargestellte Eingabe-/Ausgabemodul 1 weist eine zweite Verbindungseinrichtung 5 zum mechanischen und elektrischen Koppeln mit dem elektronischen Speichergerät 2 an dessen erste Verbindungseinrichtung 3 auf. Zum elektrischen Koppeln sind sowohl die erste Verbindungseinrichtung 3 des elektronischen Speichergeräts 2 als auch die zweite Verbindungseinrichtung 5 des Eingabe-/Ausgabemoduls in der in Figur 1 dargestellten Ausführungsform jeweils mit einer elektrischen Schnittstelle 9a, 9b ausgestattet, sodass das elektronische Speichergerät 2 über dessen elektrische Schnittstelle 9a mit der elektrischen Schnittstelle 9b des Eingabe-/Ausgabemoduls 1 elektrisch gekoppelt werden kann. Zum mechanischen Koppeln hingegen umfasst die erste Verbindungseinrichtung 3 des elektronischen Speichergeräts 2 ein erstes mechanisches Kodierungsmittel 4 und die zweite Verbindungseinrichtung 5 des Eingabe-/Ausgabemoduls 1 ein zweites mechanisches Kodierungsmittel 6, welches komplementär zu dem ersten mechanischen Kodierungsmittel 4 ausgebildet ist.

Das erste mechanische Kodierungsmittel 4 des elektronischen Speichergeräts 2 weist vorzugsweise eine erste definierte mechanische Ausgestaltung 7 auf. In Figur 1 besteht die erste definierte mechanische Ausgestaltung 7 des ersten mechanischen Kodierungsmittels 4 aus zwei Elementen, und zwar zwei Quadern, welche von der im elektrisch und mechanisch gekoppelten Zustand des elektronischen Speichergeräts 2 mit dem Eingabe-/Ausgabemodul 1 zu dem Eingabe-/Ausgabemodul 1 hingewandten Fläche des elektronischen Speichergeräts 2 hervorstehen. Es sind jedoch auch verschiedenste andere geometrische Formen denkbar und auch die Anzahl der hervorstehenden Elemente kann beliebig sein angefangen mit einem hervorstehenden Element. Auch können anstatt von hervorstehenden Elementen auch komplementär dazu ausgebildete Ausnehmungen oder auch eine Kombination von hervorstehenden Elementen und Ausnehmungen als erste definierte mechanische Ausgestaltung 7 an dem elektronischen Speichergerät 2 ausgebildet sein. Das zweite mechanische Kodierungsmittel 6 des Eingabe-/Ausgabemoduls 1 weist vorzugsweise eine zweite definierte mechanische Ausgestaltung 8 auf, die komplementär zu der ersten definierten mechanischen Ausgestaltung 7 des ersten mechanischen Kodierungsmittels 4 ausgebildet ist. In dem in Figur 1 dargestellten Beispiel besteht die zweite definierte mechanische Ausgestaltung 8 des zweiten mechanischen Kodierungsmittels 6 aus zwei quaderförmigen Ausnehmungen 7. Diese quaderförmigen Ausnehmungen 7 sind auf der im elektrisch und mechanisch gekoppelten Zustand des elektronischen Speichergeräts 2 mit dem Eingabe-/Ausgabemodul 1 zu dem elektronischen Speichergerät 2 hingewandten Fläche des Eingabe-/Ausgabemoduls 1 derart ausgebildet, dass sie die zwei hervorstehenden Quader 7 des ersten mechanischen Kodierungsmittels 4 des elektronischen Speichergeräts 2 im Wesentlichen vollständig aufnehmen.

Das in Figur 1 gezeigte sicherheitsgerichtete Eingabe-/Ausgabemodul 1 weist ferner eine Schnittstelle 12 zum Anschließen beispielsweise eines Feldgeräts (nicht gezeigt), beispielsweise eines Aktors oder Sensors, auf. In diesem Fall ist der Sensor insbesondere dazu ausgebildet, ein sicherheitsbezogenes Eingangssignal zu erzeugen, während der Aktor insbesondere dazu ausgebildet ist, ein sicherheitsbezogenes Ausgangssignal. Das sicherheitsbezogene Eingangssignal kann z.B. signalisieren, dass ein Notaus- Taster betätigt worden ist, während das vom Aktor erzeugte sicherheitsbezogene Ausgangssignal zum Beispiel einen Motor ausschalten kann. Zudem umfasst das Eingabe-/Ausgabemodul 1 einen Mikrocontroller 10, der das Eingabe-/Ausgabemodul 1 steuert und überwacht, und eine Speichereinrichtung 11, in welcher ein Betriebssystem gespeichert ist und welche mit dem Mikrocontroller 10 elektrisch gekoppelt ist. In dem in Figur 1 dargestellten Ausführungsbeispiel weist das Eingabe-/Ausgabemodul 1 in vorteilhafter Weise ferner einen Sensor 13 auf, der mit dem zweiten mechanischen Kodierungsmittel 6 und vorzugsweise mit dem Mikrocontroller 10 elektrisch gekoppelt ist und vorteilhafterweise als Berührungssensor 13 ausgebildet ist. Der Berührungssensor 13 ist insbesondere dazu ausgebildet, im elektrisch und mechanisch gekoppelten Zustand (nicht gezeigt) des elektronischen Speichergeräts 2 mit dem Eingabe-/Ausgabemodul 1 ein elektrisches Signal an den Mikrocontroller 10 zu senden, welches signalisiert, dass das elektronische Speichergerät 2 mit dem Eingabe-/Ausgabemodul 1 korrekt mechanisch gekoppelt ist. Eine korrekte mechanische Kopplung bedeutet, dass das erste mechanische Kodierungsmittel 4 mit dem zweiten mechanischen Kodierungsmittel 6 in der dafür vorgesehenen und angedachten Weise mechanisch gekoppelt ist und insbesondere kein gewaltsames Einführen des ersten mechanischen Kodierungsmittels 4 in das zweite mechanische Kodierungsmittel 6 wider den vorgesehenen Verwendungszweck, wie beispielsweise ein Abbrechen zumindest eines der hervorstehenden Quader, erfolgt. Der Mikrocontroller 10, die Speichereinrichtung 11 und der Berührungssensor 13 sind in der Figur 1 jeweils gestrichelt dargestellt, da sie sich in Figur 1 im Inneren des Eingabe-/Ausgabemoduls 1 befinden und von der gezeigten Außenansicht auf das Eingabe-/Ausgabemodul 1 nicht sichtbar sind.

Gemäß einer vorteilhaften Weiterbildung kann das sicherheitsgerichtete Gerät 1 auch mehrkanalig, zum Beispiel zweikanalig ausgebildet sein. In diesem Fall umfasst das Eingabe-/Ausgabemodul 1 wenigstens einen weiteren Mikrocontroller 15, der das Eingabe-/Ausgabemodul 1 steuert und überwacht, und eine weitere Speichereinrichtung 16, in welcher ein Betriebssystem gespeichert ist und welche mit dem Mikrocontroller 15 elektrisch gekoppelt ist. Angemerkt sei, dass der Mikrocontroller 10 und der Mikrocontroller 15 sich unterscheiden können. Beispielsweise stammen sie von unterschiedlichen Herstellern. Der Berührungssensor 13 ist insbesondere dazu ausgebildet, im elektrisch und mechanisch gekoppelten Zustand (nicht gezeigt) des elektronischen Speichergeräts 2 mit dem Eingabe-/Ausgabemodul 1 ein elektrisches Signal auch an den Mikrocontroller 15 zu senden, welches signalisiert, dass das elektronische Speichergerät 2 mit dem Eingabe-/Ausgabemodul 1 korrekt mechanisch gekoppelt ist. Der Mikrocontroller 15 und die Speichereinrichtung 16 sind in der Figur 1 jeweils gestrichelt dargestellt, da sie sich in Figur 1 im Inneren des Eingabe-/Ausgabemoduls 1 befinden und von der gezeigten Außenansicht auf das Eingabe-/Ausgabemodul 1 nicht sichtbar sind. Gemäß dieser beispielhaften Ausführung ist in dem elektronischen Speichergerät 2 ein zweiter Dateninhalt gespeichert, der für das zweikanalige sicherheitsgerichtete Eingabe-/Ausgabemodul 1 bestimmt ist (nicht in Figur 1 gezeigt), wobei der zweite Dateninhalt entweder ein Betriebssoftware-Update oder eine Adresse für das Eingabe-/Ausgabemodul 1 ist, welche identisch mit der Adresse, die durch den ersten Dateninhalt repräsentiert wird, sein kann. Angemerkt sei, dass die beiden Speichereinrichtungen 11 und 16 jeweils einen physikalischen Speicher bilden oder durch einen gemeinsamen Speicher realisiert sein können, in welchem sie jeweils einen Speicherbereich bilden.

Im Folgenden wird die Funktionsweise des Systems aus sicherheitsgerichtetem Eingabe-/Ausgabemodul 1 und elektronischem Speichergerät 2 gemäß der ersten beispielhaften Ausführungsform näher erläutert. In dem elektronischen Speichergerät 2 ist genau ein Dateninhalt für das sicherheitsgerichtete Eingabe-/Ausgabemodul 2 gespeichert, welcher wie folgt von dem elektronischen Speichergerät 2 in die Speichereinrichtung 11 des Eingabe-/Ausgabemoduls 2 übertragen wird. Zunächst wird das Eingabe-/Ausgabemodul 2 von einer nicht in den Figuren dargestellten Spannungsversorgung getrennt. Daraufhin wird das elektronische Speichergerät 2 über seine erste Verbindungseinrichtung 3 mit der zweiten Verbindungseinrichtung 5 des Eingabe-/Ausgabemoduls 1 elektrisch und mechanisch gekoppelt. Eine elektrische Koppelung, welche in dem Ausführungsbeispiel der Figur 1 durch ein Koppeln der elektrischen Schnittstelle 9a des elektronischen Speichergeräts 2 mit der elektrischen Schnittstelle 9b des Eingabe-/Ausgabemoduls 1 zustande kommt, jedoch nicht im Detail gezeigt ist, erfolgt jedoch nur bei korrekter mechanischer Kopplung des ersten mechanischen Kodierungsmittels 4 mit dem komplementär zu diesem ausgebildeten zweiten mechanischen Kodierungsmittel 6. Umfasst das Eingabe-/Ausgabemodul 1 vorzugsweise einen Sensor 13, insbesondere einen Berührungssensor 13, so erkennt dieser, ob eine korrekte mechanische Kopplung vorliegt. Ist dies der Fall, sendet der Berührungssensor 13 ein entsprechendes Signal diesbezüglich an den Mikrocontroller 10 sowie vorteilhafterweise auch an eine an dem Eingabe-/Ausgabemodul 1 angebrachte LED-Anzeige 14, die daraufhin grünes Licht anzeigt. Liegt jedoch keine korrekte mechanische Kopplung vor, so signalisiert der Berührungssensor 13 dies dem Mikrocontroller 10 und der LED-Anzeige 14 ebenfalls. Daraufhin zeigt die LED-Anzeige 14 rotes Licht an und der Mikrocontroller 10 unternimmt keine weiteren Schritte hinsichtlich des elektronischen Speichergeräts 2. Bei von dem Berührungssensor 13 gemeldeter inkorrekter mechanischer Kopplung lädt der Mikrocontroller 10 somit insbesondere den in dem elektronischen Speichergerät 2 gespeicherten genau einen Dateninhalt nicht in die Speichereinrichtung 11 des Eingabe-Ausgabemoduls 1 herunter.

Nach einer erfolgreichen, mechanischen und elektrischen Kopplung wird das Eingabe-/Ausgabemodul 1 an die Spannungsversorgung angeschlossen. Der Mikrocontroller 10 des Eingabe-/Ausgabemoduls 1 erkennt vorzugsweise bereits im Hochladen, ob das elektronische Speichergerät 2 über dessen erste Verbindungseinrichtung 3 an der zweiten Verbindungseinrichtung 5 des Eingabe-/Ausgabemoduls 1 angeschlossen ist. Ist dies der Fall, lädt der Mikrocontroller 10 den genau einen in dem elektronischen Speichergerät 2 gespeicherten Dateninhalt von dem elektronischen Speichergerät 2 in die Speichereinrichtung 11 des Eingabe-/Ausgabemoduls 1 herunter. Vorzugsweise erkennt der Mikrocontroller 10 darüber hinaus auch, ob das elektronische Speichergerät 2 an das Eingabe-/Ausgabemodul 1 zum ersten Mal angeschlossen worden ist. Falls dies der Fall ist, so interpretiert der Mikrocontroller 10 den genau einen Dateninhalt des elektronischen Speichergeräts 2 als Adresse, welche der Kommunikation des Eingabe-/Ausgabemoduls 1 beispielsweise mit weiteren Eingabe-/Ausgabemodulen in einer Netzwerkinfrastruktur dient, und lädt diese Adresse in die Speichereinrichtung 11 des Eingabe-/Ausgabemoduls 1 herunter. Ist das elektronische Speichergerät 2 an das Eingabe-/Ausgabemodul 1 jedoch nicht zum ersten Mal angeschlossen worden, so interpretiert der Mikrocontroller 10 den genau einen Dateninhalt des elektronischen Speichergeräts 2 hingegen als Betriebssoftware-Update, lädt dieses Betriebssoftware-Update in die Speichereinrichtung 11 des Eingabe-/Ausgabemoduls 1 herunter und startet insbesondere das Betriebssoftware-Update, um das in der Speichereinrichtung 11 gespeicherte Betriebssystem zu aktualisieren. Zuletzt wird das elektronische Speichergerät 2 von dem Eingabe-/Ausgabemodul 1 sowohl elektrisch als auch mechanisch entkoppelt und somit von dem Eingabe-/Ausgabemodul 1 entfernt.

Gemäß einer vorteilhaften Ausgestaltung kann hierzu im elektronischen Speichergerät 2, 2', 2", 2‴ eine Dateninhalt-Kennung gespeichert werden, welche angibt, ob der genau eine, im elektronischen Speichergerät 2, 2', 2", 2‴ gespeicherte Dateninhalt ein Betriebssoftware-Update oder eine Adresse für das sicherheitsgerichtete Gerät 1, 1', 1", 1‴ ist. In diesem Zusammenhang kann der Mikrocontroller 10 dazu ausgebildet sein, für den Fall, dass das elektronische Speichergerät 2, 2', 2", 2‴ über dessen erste Verbindungseinrichtung 3, 3', 3", 3‴ an der zweiten Verbindungseinrichtung 5, 5', 5", 5‴ des sicherheitsgerichteten Geräts 1, 1', 1", 1‴ angeschlossen ist, zuerst die Dateninhalt-Kennung aus dem elektronischen Speichergerät 2, 2', 2", 2‴ auszulesen und zu interpretieren und anschließend in Abhängigkeit von der interpretierten Dateninhalt-Kennung das Betriebssoftware-Update oder die Adresse in die Speichereinrichtung 11 herunterzuladen und dann gegebenenfalls zu starten. Die Stelle, an der die Dateninhalt-Kennung im elektronischen Speichergerät abgelegt ist, ist dem Mikrocontroller 10 bekannt. In der Praxis wird es zweckmäßigerweise so ablaufen, dass bei einer erstmaligen Benutzung des sicherheitsgerichteten Geräts zunächst ein elektronisches Speichergerät angeschlossen wird, in welchem eine Adresse, insbesondere eine Sicherheitsadresse als Dateninhalt für das sicherheitsgerichtete Gerät gespeichert. Anschließend, d.h. während des Betriebs kann in der Regel mittels des elektronischen Speichergeräts ein Betriebssoftware-Update in das sicherheitsgerichtete Gerät heruntergeladen und dort gestartet werden.

Um das Herunterladen eines Betriebssoftware-Updates effizient und energiesparend ausführen zu können, kann, falls der genau eine Dateninhalt ein Betriebssoftware-Update ist, das elektronische Speichergerät 2, 2', 2", 2‴ zusätzlich eine Betriebssoftware-Updatekennung speichern. Bei der Betriebssoftware-Updatekennung kann es sich zum Beispiel um eine Prüfsumme handeln, welche über dem Betriebssoftware-Update gebildet und zusammen mit diesem im elektronischen Speichergerät 2 abgelegt worden ist. Der Mikrocontroller 10 kann dazu ausgebildet sein,
i) nach dem Auslesen und Interpretieren der Dateninhalt-Kennung die Betriebssoftware-Updatekennung aus dem elektronischen Speichergerät auszulesen,
ii) unter Ansprechen auf die ausgelesene Betriebssoftware-Updatekennung zu prüfen, ob das dazugehörende Betriebssoftware-Update in der Speichereinrichtung gespeichert ist, und nur dann, wenn das dazugehörende betriebssoftware-Update nicht in der Speichereinrichtung 11 gespeichert ist, den genau einen Dateninhalt in die Speichereinrichtung herunterzuladen. Hierzu kann im Mikrocontroller 10 ebenfalls eine Kennung, zum Beispiel die Prüfsumme des im elektronischen Speichergeräts gespeicherten Betriebssoftware-Updates gespeichert sein, die der Mikrocontroller 10 mit der ausgelesenen Betriebssoftware-Updatekennung dann vergleicht. Für den Fall, dass überhaupt noch kein Betriebssoftware-Update in die Speichereinrichtung 11 heruntergeladen worden ist, ist auch noch keine Update-Kennung in dem sicherheitsgerichteten Gerät gespeichert. Stellt der Mikrokontrolle 10 keine Übereinstimmung zwischen der ausgelesenen Betriebssoftware-Updatekennung und der in der Speichereinrichtung 11 gespeicherten Kennung fest, veranlasst er, dass das Betriebssoftware-Update vom elektronischen Speichergerät heruntergeladen und zusammen mit der Betriebssoftware-Updatekennung in der Speichereinrichtung 11 gespeichert wird. Eine fehlende Übereinstimmung erkennt der Mikrocontroller 10 z.B. auch daran, dass noch überhaupt kein Betriebssoftware-Update im sicherheitsgerichteten Gerät heruntergeladen worden ist. Angemerkt sei noch, dass der Mikrocontroller 10 die Betriebssoftware-Updatekennung als Startadresse verwenden kann, unter welcher der genau eine Dateninhalt in dem elektronischen Speichergerät zu finden ist. Falls auf dem elektronischen Speichergerät eine Dateiverzeichnisstruktur benutzt wird, kann als Betriebssoftware-Updatekennung auch ein Dateiname verwendet werden, unter dem der Mikrocontroller 10 den genau einen Dateninhalt finden kann.

Nachfolgend wird die Funktionsweise des Systems aus sicherheitsgerichtetem Eingabe-/Ausgabemodul 1 und elektronischem Speichergerät 2 gemäß der vorteilhaften Weiterbildung näher erläutert, gemäß der das sicherheitsgerichtete Gerät 1 zweikanalig ausgebildet ist.

In dem elektronischen Speichergerät 2 ist ein erster Dateninhalt und ein zweiter Dateninhalt für das sicherheitsgerichtete Eingabe-/Ausgabemodul 2 gespeichert, welche jeweils ein Betriebssystem-Update- oder jeweils eine Adresse sein können. Der erste und zweite Dateninhalt werden wie folgt von dem elektronischen Speichergerät 2 in die Speichereinrichtung 11 bzw. in die Speichereinrichtung 16 des Eingabe-/Ausgabemoduls 1 übertragen. Zunächst wird das Eingabe-/Ausgabemodul 1 von einer nicht in den Figuren dargestellten Spannungsversorgung getrennt. Daraufhin wird das elektronische Speichergerät 2 über seine erste Verbindungseinrichtung 3 mit der zweiten Verbindungseinrichtung 5 des Eingabe-/Ausgabemoduls 1 elektrisch und mechanisch gekoppelt. Eine elektrische Koppelung, welche in dem Ausführungsbeispiel der Figur 1 durch ein Koppeln der elektrischen Schnittstelle 9a des elektronischen Speichergeräts 2 mit der elektrischen Schnittstelle 9b des Eingabe-/Ausgabemoduls 1 zustande kommt, jedoch nicht im Detail gezeigt ist, erfolgt jedoch nur bei korrekter mechanischer Kopplung des ersten mechanischen Kodierungsmittels 4 mit dem komplementär zu diesem ausgebildeten zweiten mechanischen Kodierungsmittel 6. Umfasst das Eingabe-/Ausgabemodul 1 vorzugsweise einen Sensor 13, insbesondere einen Berührungssensor, so erkennt dieser, ob eine korrekte mechanische Kopplung vorliegt. Ist dies der Fall, sendet der Berührungssensor 13 ein entsprechendes Signal diesbezüglich an den Mikrocontroller 10 und den Mikrocontroller 15 sowie vorteilhafterweise auch an eine an dem Eingabe-/Ausgabemodul 1 angebrachte LED-Anzeige 14, die daraufhin grünes Licht anzeigt. Liegt jedoch keine korrekte mechanische Kopplung vor, so signalisiert der Berührungssensor 13 dies dem Mikrocontroller 10 und dem Mikrocontroller 15 und der LED-Anzeige 14 ebenfalls. Daraufhin zeigt die LED-Anzeige 14 rotes Licht an und der Mikrocontroller 10 unternimmt keine weiteren Schritte hinsichtlich des elektronischen Speichergeräts 2. Bei von dem Berührungssensor 13 gemeldeter inkorrekter mechanischer Kopplung lädt der Mikrocontroller 10 somit insbesondere den in dem elektronischen Speichergerät 2 gespeicherten ersten Dateninhalt nicht in die Speichereinrichtung 11 des Eingabe-Ausgabemoduls 1 und der Mikrocontroller 15 somit insbesondere den in dem elektronischen Speichergerät 2 gespeicherten zweiten Dateninhalt nicht in die Speichereinrichtung 16 des Eingabe-Ausgabemoduls 1 herunter.

Nach einer erfolgreichen, mechanischen und elektrischen Kopplung wird das Eingabe-/Ausgabemodul 1 an die Spannungsversorgung angeschlossen. Die Mikrocontroller 10und 15 des Eingabe-/Ausgabemoduls 1 erkennen vorzugsweise bereits im Hochladen, ob das elektronische Speichergerät 2 über dessen erste Verbindungseinrichtung 3 an der zweiten Verbindungseinrichtung 5 des Eingabe-/Ausgabemoduls 1 angeschlossen ist. Ist dies der Fall, lädt der Mikrocontroller 10 den ersten in dem elektronischen Speichergerät 2 gespeicherten Dateninhalt von dem elektronischen Speichergerät 2 in die Speichereinrichtung 11 des Eingabe-/Ausgabemoduls 1 und der Mikrocontroller 15 den zweiten in dem elektronischen Speichergerät 2 gespeicherten Dateninhalt von dem elektronischen Speichergerät 2 in die Speichereinrichtung 16 des Eingabe-/Ausgabemoduls 1 herunter.

Da das elektronische Speichergerät 2, Betriebssoftware-Update- oder Adressen-Speichergerät eingesetzt werden kann, kann in dem elektronischen Speichergerät 2 eine Dateninhalt-Kennung gespeichert werden, welche angibt, ob der erste und der zweite im elektronischen Speichergerät 2 gespeicherte Dateninhalt jeweils ein Betriebssoftware-Update oder jeweils eine Adresse für das sicherheitsgerichtete Gerät 1 ist. Der erste Mikrocontroller 10 kann dazu ausgebildet sein, für den Fall, dass das elektronische Speichergerät 2 über dessen erste Verbindungseinrichtung 3, 3', 3", 3‴ an der zweiten Verbindungseinrichtung 5 des Eingabe-/Ausgabemoduls 1 angeschlossen ist, zuerst die Dateninhalt-Kennung aus dem elektronischen Speichergerät 2 auszulesen und zu interpretieren und anschließend in Abhängigkeit von der interpretierten Dateninhalt-Kennung das jeweilige Betriebssoftware-Update oder die jeweilige Adresse in die erste Speichereinrichtung 11 herunterzuladen, wobei der zweite Mikrocontroller 15 dazu ausgebildet sein kann, für den Fall, dass das elektronische Speichergerät 2 über dessen erste Verbindungseinrichtung 3 an der zweiten Verbindungseinrichtung 5 des Eingabe-/Ausgabemoduls 1 angeschlossen ist, zuerst die Dateninhalt-Kennung aus dem elektronischen Speichergerät 2 auszulesen und zu interpretieren und anschließend in Abhängigkeit von der interpretierten Dateninhalt-Kennung das jeweilige Betriebssoftware-Update oder die jeweilige Adresse in die zweite Speichereinrichtung 16 herunterzuladen.

Um ein Betriebssoftware-Update effizient und energiesparend durchführen zu können, kann, falls der erste Dateninhalt und der zweite Dateninhalt jeweils ein Betriebssoftware-Update sind, in dem elektronische Speichergerät 2 ferner eine erste, dem ersten Dateninhalt zugeordnete Betriebssoftware-Updatekennung und eine zweite dem zweiten Dateninhalt zugeordnete Betriebssoftware-Updatekennung gespeichert werden. Bei der ersten und zweiten Betriebssoftware-Updatekennung kann es sich zum Beispiel jeweils um eine Prüfsumme handeln, welche über dem ersten bzw. zweiten Betriebssoftware-Update gebildet werden. Die erste und zweite Betriebssoftware-Updatekennung werden zusammen mit dem ersten und zweiten Dateninhalt im elektronischen Speichergerät 2 abgelegt, wobei eine logische oder physikalische Zuordnung zwischen der ersten Betriebssoftware-Updatekennung und dem ersten Dateninhalt sowie zwischen der zweiten Betriebssoftware-Updatekennung und dem zweiten Dateninhalt besteht. In diesem Fall kann der erste Mikrocontroller 10 dazu ausgebildet sein,
i) nach dem Auslesen und Interpretieren der Dateninhalt-Kennung die erste Betriebssoftware-Updatekennung aus dem elektronischen Speichergerät auszulesen,
ii) unter Ansprechen auf die ausgelesene erste Betriebssoftware-Updatekennung zu prüfen, ob das dazugehörende erste Betriebssoftware-Update in der Speichereinrichtung 11 gespeichert ist, und nur dann, wenn das dazugehörende erste Betriebssoftware-Update nicht in der Speichereinrichtung 11 gespeichert ist, den ersten Dateninhalt in die erste Speichereinrichtung 11 herunterzuladen. In ähnlicher Weise kann der zweite Mikrocontroller 15 dazu ausgebildet ist,

i) nach dem Auslesen und Interpretieren der Dateninhalt-Kennung die zweite Betriebssoftware-Updatekennung aus dem elektronischen Speichergerät auszulesen,
ii) unter Ansprechen auf die ausgelesene zweite Betriebssoftware-Updatekennung zu prüfen, ob das dazugehörende zweite Betriebssoftware-Update in der Speichereinrichtung 16 gespeichert ist, und nur dann, wenn das dazugehörende zweite Betriebssoftware-Update nicht in der Speichereinrichtung 16 gespeichert ist, den zweiten Dateninhalt in die zweite Speichereinrichtung 16 herunterzuladen. Angemerkt sei noch, dass der Mikrocontroller 10 die erste Betriebssoftware-Updatekennung als Startadresse verwenden kann, unter welcher der erste Dateninhalt in dem elektronischen Speichergerät zu finden ist. Falls auf dem elektronischen Speichergerät 2 eine Dateiverzeichnisstruktur benutzt wird, kann als erste Betriebssoftware-Updatekennung auch ein Dateiname verwendet werden, unter dem der Mikrocontroller 10 den ersten Dateninhalt finden kann. In ähnlicher Weise kann, je nach Implementierung, der Mikrocontroller 15 die zweite Betriebssoftware-Updatekennung als Startadresse verwenden kann, unter welcher der zweite Dateninhalt in dem elektronischen Speichergerät zu finden ist. Falls auf dem elektronischen Speichergerät 2 eine Dateiverzeichnisstruktur benutzt wird, kann als zweite Betriebssoftware-Updatekennung auch ein Dateiname verwendet werden, unter dem der Mikrocontroller 15 den zweiten Dateninhalt finden kann.

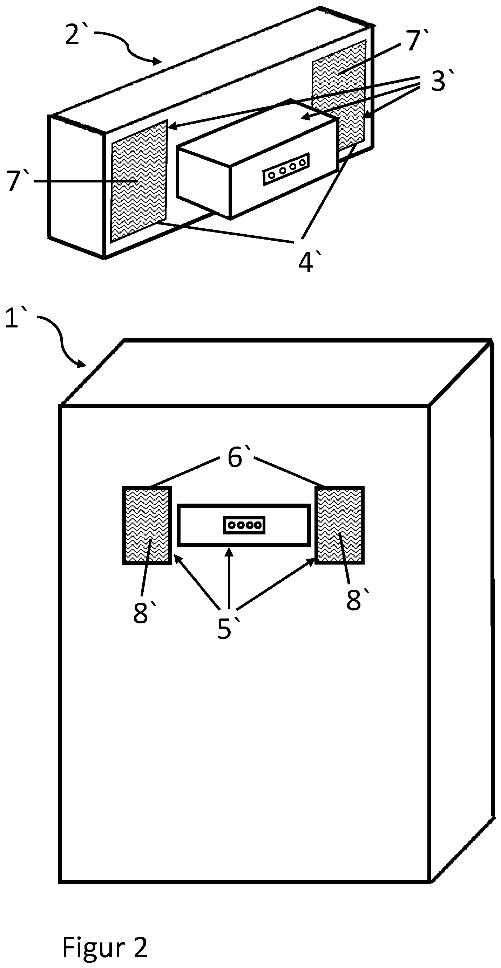

Die Figuren 2, 3 und 4 unterscheiden sich von der Figur 1 im Wesentlichen lediglich dadurch, dass das erste mechanische Kodierungsmittel 4', 4", 4‴ der ersten Verbindungseinrichtung 3', 3", 3‴ des jeweiligen dargestellten elektronischen Speichergeräts 2', 2", 2‴ und das zweite mechanische Kodierungsmittel 6', 6", 6‴ der zweiten Verbindungseinrichtung 5', 5", 5‴ des jeweiligen dargestellten sicherheitsgerichteten Eingabe-/Ausgabemoduls 1', 1", 1‴ eine von den in den Figuren 1a, 1b gezeigte, verschiedene erste definierte mechanische Ausgestaltung 7', 7", 7‴ und zweite definierte mechanische Ausgestaltung 8', 8", 8‴ aufweisen.

In Figur 2 weist das erste mechanische Kodierungsmittel 4' der ersten Verbindungseinrichtung 3' des elektronischen Speichergeräts 2' (in Figur 2 oben) vorzugsweise eine erste definierte mechanische Ausgestaltung 7' auf, welche aus zwei speziell strukturierten, insbesondere mit Riffellungen versehenen, Bereichen auf der Oberfläche des elektronischen Speichergeräts 2' besteht. Dabei können die Anzahl und die Anordnung der speziell strukturierten Bereiche variieren. Auch kann beispielsweise die gesamte, im elektrisch und mechanisch gekoppelten Zustand des elektronischen Speichergeräts 2' mit dem Eingabe-/Ausgabemodul 1' zu dem Eingabe-/Ausgabemodul 1' hingewandte Fläche des Speichergeräts 2' mit einer speziellen Strukturierung, beispielsweise einer Riffelung, einer Wellenstruktur, einer kammartigen Struktur und vieles mehr, versehen sein. Auch können verschiedene Arten der Strukturierung als erste definierte mechanische Ausgestaltung 7' vorliegen. Das zweite mechanische Kodierungsmittel 6' der zweiten Verbindungseinrichtung 5' des Eingabe-/Ausgabemoduls 1' (in Figur 2 unten) weist dementsprechend eine zu der ersten definierten mechanischen Ausgestaltung 7' komplementär ausgebildete zweite definierte mechanische Ausgestaltung 8' auf.

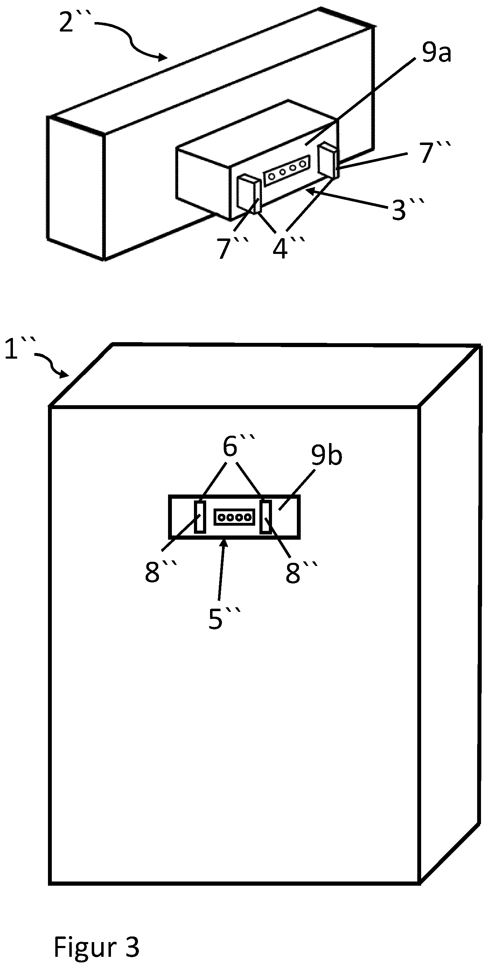

In Figur 3 weist das erste mechanische Kodierungsmittel 4" der ersten Verbindungseinrichtung 3" des elektronischen Speichergeräts 2" (in Figur 3 oben) vorzugsweise eine erste definierte mechanische Ausgestaltung 7" auf, welche aus zwei hervorstehenden Elementen, und zwar zwei Quadern, besteht, die jedoch an der elektrischen Schnittstelle 9a angeordnet sind. Es sind alternativ zu den Quadern verschiedenste andere geometrische Formen denkbar. Auch die Anzahl der hervorstehenden Elemente kann beliebig sein, angefangen mit einem hervorstehenden Element. Auch können anstatt von hervorstehenden Elementen auch komplementär dazu ausgebildete Ausnehmungen, oder aber eine Kombination von hervorstehenden Elementen und Ausnehmungen in dem elektronischen Speichergerät 2" als erste definierte mechanische Ausgestaltung 7" ausgebildet sein. Das zweite mechanische Kodierungsmittel 6" der zweiten Verbindungseinrichtung 5" des Eingabe-/Ausgabemoduls 1" (in Figur 3 unten) weist dementsprechend eine zu der ersten definierten mechanischen Ausgestaltung 7" komplementär ausgebildete zweite definierte mechanische Ausgestaltung 8" auf, und zwar in Figur 3b in Form von zwei quaderförmigen Ausnehmungen an der elektrischen Schnittstelle 9b.

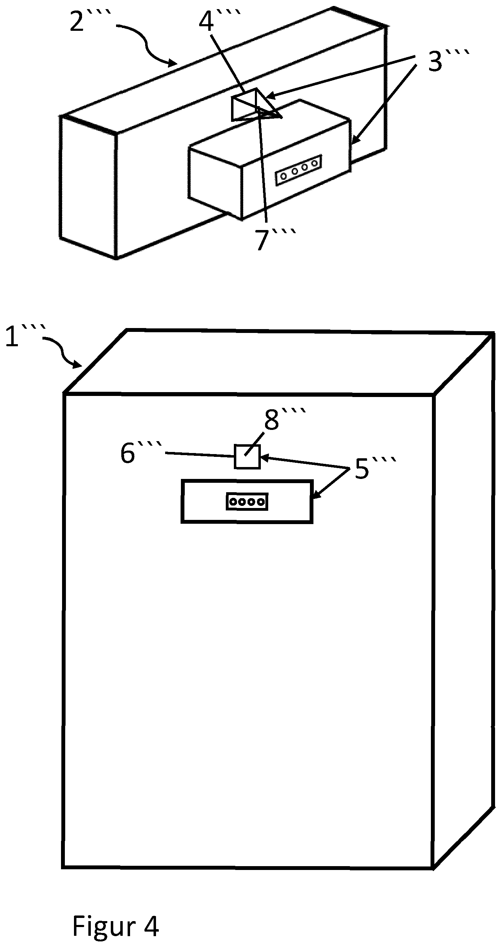

In Figur 4 weist das erste mechanische Kodierungsmittel 4‴ der ersten Verbindungseinrichtung 3‴ des elektronischen Speichergeräts 2‴ (in Figur 4 oben) vorzugsweise eine erste definierte mechanische Ausgestaltung 7‴ auf, welche aus einem hervorstehenden Element in Form eines Prismas besteht. Das zweite mechanische Kodierungsmittel 6‴ der zweiten Verbindungseinrichtung 5‴ des Eingabe-/Ausgabemoduls 1‴ (in Figur 4 unten) weist dementsprechend eine zu der ersten definierten mechanischen Ausgestaltung 7‴ komplementär ausgebildete zweite definierte mechanische Ausgestaltung 8‴ auf, und zwar in Form von einer prismenförmigen Ausnehmung.

Auch wenn in den Figuren 2, 3, 4 nicht explizit dargestellt, so weist auch das darin jeweils abgebildete sicherheitsgerichtete Eingabe-/Ausgabemodul 1', 1", 1‴ zumindest jeweils einen Mikrocontroller 10, eine Speichervorrichtung 11 und eine Schnittstelle 12 zum Anschließen eines sicherheitsgerichteten Geräts, beispielsweise eines Sensors oder Aktors, auf. Ebenfalls kann das jeweilige sicherheitsgerichtete Eingabe-/Ausgabemodul 1', 1", 1‴ in den Figuren 2, 3, 4 vorzugsweise einen mit dem zweiten mechanischen Kodierungsmittel 6', 6", 6‴ gekoppelten und vorzugsweise auch mit dem Mikrocontroller 10 elektrisch gekoppelten Sensor 13 aufweisen, der wiederum vorteilhafterweise mit einer LED-Anzeige 14 des Eingabe-/Ausgabemoduls 1', 1", 1‴ gekoppelt ist und als Berührungssensor 13 ausgebildet ist.

Anstelle eines in Figuren 1-4 beispielhaft dargestellten sicherheitsgerichteten Eingabe-/Ausgabemoduls 1, 1', 1", 1‴ kann als sicherheitsgerichtetes Gerät insbesondere eine sicherheitsgerichtete Steuerungseinrichtung oder beispielsweise ein Laserscanner, Frequenzumrichter oder ein Lichtgitter als sicherheitsgerichtetes Gerät zum Einsatz kommen.

Einige der beispielhaften Aspekte werden nachfolgend noch einmal zusammengefasst.

Es wird ein System bereitgestellt, welches ein sicherheitsgerichtetes Gerät 1, 1', 1", 1‴ mit wenigstens einem ersten Mikrocontroller 10 und einem zweiten Mikrocontroller 15 und ein vom sicherheitsgerichteten Gerät getrenntes elektronisches Speichergerät 2, 2', 2", 2‴, in welchem ein erster Dateninhalt und ein zweiter Dateninhalt für das sicherheitsgerichtete Gerät 1, 1', 1", 1‴ gespeichert sind, aufweist. Der erste und zweite Dateninhalt können entweder jeweils ein Betriebssoftware-Update oder jeweils eine Adresse sein. Das elektronische Speichergerät 2, 2', 2", 2‴ kann eine erste Verbindungseinrichtung 3, 3', 3", 3‴ zum mechanischen und elektrischen Koppeln mit dem Gerät 1, 1', 1", 1‴ umfassen, wobei die erste Verbindungseinrichtung 3, 3', 3", 3‴ ein erstes mechanisches Kodierungsmittel 4, 4', 4", 4‴ aufweist.

Das sicherheitsgerichtete Gerät 1, 1', 1", 1‴ kann eine erste, dem ersten Mikrocontroller 10 zugeordnete Speichereinrichtung 11, in welcher ein erstes Betriebssystem gespeichert ist, eine zweite, dem zweiten Mikrocontroller 15 zugeordnete Speichereinrichtung 16, in welcher ein zweites Betriebssystem gespeichert ist, und eine zweite Verbindungseinrichtung 5, 5', 5", 5‴ zum mechanischen und elektrischen Koppeln mit dem elektronischen Speichergerät 2, 2', 2", 2‴ umfassen, wobei die zweite Verbindungseinrichtung 5, 5', 5", 5‴ ein zweites mechanisches Kodierungsmittel 6, 6', 6", 6‴ aufweist, wobei das erste 4, 4', 4", 4‴ mechanische Kodierungsmittel und das zweite mechanische Kodierungsmittel 6, 6', 6", 6‴ komplementär zueinander ausgebildet sind. Der erste Mikrocontroller 10 des sicherheitsgerichteten Geräts 1, 1', 1", 1‴ kann dazu ausgebildet sein zu erkennen, ob das elektronische Speichergerät 2, 2', 2", 2‴ über dessen erste Verbindungseinrichtung 3, 3', 3", 3‴ an der zweiten Verbindungseinrichtung 5, 5', 5", 5‴ des sicherheitsgerichteten Geräts 1, 1', 1", 1‴ angeschlossen ist. In diesem Fall kann der erste Mikrocontroller 10 ferner dazu ausgebildet sein, den ersten in dem elektronischen Speichergerät 2, 2', 2", 2‴ gespeicherten Dateninhalt von dem elektronischen Speichergerät 2, 2', 2", 2‴ in die erste Speichereinrichtung 11 des Geräts 1, 1', 1", 1‴ herunterzuladen, und wobei der zweite Mikrocontroller 15 des sicherheitsgerichteten Geräts 1, 1', 1", 1‴ dazu ausgebildet sein kann, zu erkennen, ob das elektronische Speichergerät 2, 2', 2", 2‴ über dessen erste Verbindungseinrichtung 3, 3', 3", 3‴ an der zweiten Verbindungseinrichtung 5, 5', 5", 5‴ des Geräts 1, 1', 1", 1‴ angeschlossen ist. In diesem Fall kann der zweite Mikrocontroller 15 ferner dazu ausgebildet sein, den zweiten in dem elektronischen Speichergerät 2, 2', 2", 2‴ gespeicherten Dateninhalt von dem elektronischen Speichergerät 2, 2', 2", 2‴ in die zweite Speichereinrichtung 16 des Geräts 1, 1', 1", 1‴ herunterzuladen.

Das sicherheitsgerichtete Gerät 1, 1', 1", 1‴ ist vorzugsweise mehrkanalig ausgebildet.

Vorzugsweise kann das elektronische Speichergerät 2, 2', 2", 2‴ eine Dateninhalt-Kennung speichern, welche angibt, ob der erste und der zweite im elektronischen Speichergerät 2, 2', 2", 2‴ gespeicherte Dateninhalt jeweils ein Betriebssoftware-Update oder jeweils eine Adresse für das sicherheitsgerichtete Gerät 1, 1', 1", 1‴ ist. Der erste Mikrocontroller 10 kann dazu ausgebildet sein, für den Fall, dass das elektronische Speichergerät 2, 2', 2", 2‴ über dessen erste Verbindungseinrichtung 3, 3', 3", 3‴ an der zweiten Verbindungseinrichtung 5, 5', 5", 5‴ des sicherheitsgerichteten Geräts 1, 1', 1", 1‴ angeschlossen ist, zuerst die Dateninhalt-Kennung aus dem elektronischen Speichergerät 2, 2', 2", 2‴ auszulesen und zu interpretieren und anschließend in Abhängigkeit von der interpretierten Dateninhalt-Kennung das jeweilige Betriebssoftware-Update oder die jeweilige Adresse in die erste Speichereinrichtung 11 herunterzuladen. In ähnlicher Weise kann der zweite Mikrocontroller 15 dazu ausgebildet sein, für den Fall, dass das elektronische Speichergerät (2, 2', 2", 2‴) über dessen erste Verbindungseinrichtung 3, 3', 3", 3‴ an der zweiten Verbindungseinrichtung 5, 5', 5", 5‴ des Geräts 1, 1', 1", 1‴ angeschlossen ist, zuerst die Dateninhalt-Kennung aus dem elektronischen Speichergerät 2, 2', 2", 2‴ auszulesen und zu interpretieren und anschließend in Abhängigkeit von der interpretierten Dateninhalt-Kennung das jeweilige Betriebssoftware-Update oder die jeweilige Adresse in die zweite Speichereinrichtung 16 herunterzuladen.

Falls der erste Dateninhalt und der zweite Dateninhalt jeweils ein Betriebssoftware-Update sind, kann vorzugsweise das elektronische Speichergerät 2, 2', 2", 2‴ eine erste, dem ersten Dateninhalt zugeordnete Betriebssoftware-Updatekennung und eine zweite dem zweiten Dateninhalt zugeordnete Betriebssoftware-Updatekennung speichern. Der erste Mikrocontroller 10 kann dann dazu ausgebildet sein,
i) nach dem Auslesen und Interpretieren der Dateninhalt-Kennung die erste Betriebssoftware-Updatekennung aus dem elektronischen Speichergerät auszulesen,
ii) unter Ansprechen auf die ausgelesene erste Betriebssoftware-Updatekennung zu prüfen, ob das dazugehörende erste Betriebssoftware-Update in der Speichereinrichtung 11 gespeichert ist, und nur dann, wenn das dazugehörende erste Betriebssoftware-Update nicht in der Speichereinrichtung 11 gespeichert ist, den ersten Dateninhalt in die erste Speichereinrichtung 11 herunterzuladen. Der zweite Mikrocontroller 15 kann dazu ausgebildet sein,

i) nach dem Auslesen und Interpretieren der Dateninhalt-Kennung die zweite Betriebssoftware-Updatekennung aus dem elektronischen Speichergerät auszulesen,
ii) unter Ansprechen auf die ausgelesene zweite Betriebssoftware-Updatekennung zu prüfen, ob das dazugehörende zweite Betriebssoftware-Update in der Speichereinrichtung 16 gespeichert ist, und nur dann, wenn das dazugehörende zweite Betriebssoftware-Update nicht in der Speichereinrichtung 16 gespeichert ist, den zweiten Dateninhalt in die zweite Speichereinrichtung 16 herunterzuladen.

### Bezugszeichenliste

- 1, 1', 1", 1‴: sicherheitsgerichtetes Eingabe-/Ausgabemodul als Bespiel für ein sicherheitsgerichtetes Gerät
- 2, 2', 2", 2‴:: elektronisches Speichergerät
- 3, 3', 3", 3‴:: erste Verbindungseinrichtung
- 4, 4', 4", 4‴:: erstes mechanisches Kodierungsmittel
- 5, 5', 5", 5‴:: zweite Verbindungseinrichtung
- 6, 6', 6", 6‴:: zweites mechanisches Kodierungsmittel
- 7, 7', 7", 7‴:: erste definierte mechanische Ausgestaltung
- 8 ,8', 8", 8‴:: zweite definierte mechanische Ausgestaltung
- 9a, 9b:: elektrische Schnittstelle des Speicher-mediums, Eingabe-/Ausgabemoduls
- 10:: Mikrocontroller
- 11:: Speichereinrichtung
- 12:: Schnittstelle zu einem Feldgerät
- 13:: Sensor
- 14:: LED-Anzeige
- 15:: Mikrocontroller
- 16:: Speichereinrichtung

## Patentansprüche

1. System umfassend ein sicherheitsgerichtetes Gerät (1, 1', 1", 1‴), welches ein sicherheitsgerichtetes Eingabe-/Ausgabemodul einer Maschine oder Anlage oder eine sicherheitsgerichtete Steuerungseinrichtung einer Maschine oder Anlage ist und dazu ausgebildet ist, zum Ausführen sicherheitsbezogener Steuerungsfunktionen auf dem Gebiet der funktionalen Sicherheit sicherheitsbezogene Eingangssignale und/oder sicherheitsbezogene Ausgangssignale zu erzeugen oder auf sicherheitsbezogene Eingangssignale zu reagieren, und ein davon getrenntes elektronisches Speichergerät (2, 2', 2", 2‴), in welchem nur genau ein Dateninhalt für das sicherheitsgerichtete Gerät (1, 1', 1", 1‴) gespeichert ist, wobei der genau eine Dateninhalt entweder ein Betriebssoftware-Update oder eine Adresse ist,
wobei das elektronische Speichergerät (2, 2', 2", 2‴) eine erste
Verbindungseinrichtung (3, 3', 3", 3‴) zum mechanischen und elektrischen Koppeln mit dem Gerät (1, 1', 1", 1‴) umfasst, wobei die erste Verbindungseinrichtung (3, 3', 3", 3‴) ein erstes mechanisches Kodierungsmittel (4, 4', 4", 4‴) aufweist, und
wobei das Gerät (1, 1', 1", 1‴) eine Speichereinrichtung (11), in welcher ein Betriebssystem gespeichert ist, einen Mikrocontroller (10) und eine zweite Verbindungseinrichtung (5, 5', 5", 5‴) zum mechanischen und elektrischen Koppeln mit dem elektronischen Speichergerät (2, 2', 2", 2‴) umfasst, wobei die zweite Verbindungseinrichtung (5, 5', 5", 5‴) ein zweites mechanisches Kodierungsmittel (6, 6', 6", 6‴) aufweist, wobei das erste (4, 4', 4", 4‴) mechanische Kodierungsmittel und das zweite mechanische Kodierungsmittel (6, 6', 6", 6‴) komplementär zueinander ausgebildet sind,
wobei der Mikrocontroller (10) des Geräts (1, 1', 1", 1‴) dazu ausgebildet ist zu erkennen, ob das elektronische Speichergerät (2, 2', 2", 2‴) über dessen erste Verbindungseinrichtung (3, 3', 3", 3‴) an der zweiten Verbindungseinrichtung (5, 5', 5", 5‴) des Geräts (1, 1', 1", 1‴) angeschlossen ist, und in diesem Fall ferner dazu ausgebildet ist, den genau einen in dem elektronischen Speichergerät (2, 2', 2", 2‴) gespeicherten Dateninhalt von dem elektronischen Speichergerät (2, 2', 2", 2‴) in die Speichereinrichtung (11) des Geräts (1, 1', 1", 1‴) herunterzuladen, und wobei das elektronische Speichergerät (2, 2', 2", 2‴) eine Dateninhalt-Kennung speichert, welche angibt, ob der genau eine, im elektronischen Speichergerät (2, 2', 2", 2‴) gespeicherte Dateninhalt ein Betriebssoftware-Update oder eine Adresse für das sicherheitsgerichtete Gerät (1, 1', 1", 1‴) ist, und
der Mikrocontroller (10) dazu ausgebildet ist, für den Fall, dass das elektronische Speichergerät (2, 2', 2", 2‴) über dessen erste Verbindungseinrichtung (3, 3', 3", 3‴) an der zweiten Verbindungseinrichtung (5, 5', 5", 5‴) des Geräts (1, 1', 1", 1‴) angeschlossen ist, zuerst die Dateninhalt-Kennung aus dem elektronischen Speichergerät (2, 2', 2", 2‴) auszulesen und zu interpretieren und anschließend in Abhängigkeit von der interpretierten Dateninhalt-Kennung das Betriebssoftware-Update oder die Adresse in die Speichereinrichtung (11) des sicherheitsgerichteten Geräts (1, 1', 1", 1‴) herunterzuladen.

2. System gemäß Anspruch 1, **dadurch gekennzeichnet, dass**, falls der genau eine Dateninhalt ein Betriebssoftware-Update ist, das elektronische Speichergerät (2, 2', 2", 2‴) eine Betriebssoftware-Updatekennung speichert, und dass der Mikrocontroller dazu ausgebildet ist,
i) nach dem Auslesen und Interpretieren der Dateninhalt-Kennung die Betriebssoftware-Updatekennung aus dem elektronischen Speichergerät auszulesen,
ii) unter Ansprechen auf die ausgelesene Betriebssoftware-Updatekennung zu prüfen, ob das dazugehörende Betriebssoftware-Update in der Speichereinrichtung (11) gespeichert ist, und nur dann, wenn das dazugehörende betriebssoftware-Update nicht in der Speichereinrichtung gespeichert ist, den genau einen Dateninhalt in die Speichereinrichtung herunterzuladen.

3. System umfassend ein mehrkanalig ausgebildetes sicherheitsgerichtetes Gerät (1, 1', 1", 1‴), welches ein sicherheitsgerichtetes Eingabe-/Ausgabemodul einer Maschine oder Anlage oder eine sicherheitsgerichtete Steuerungseinrichtung einer Maschine oder Anlage ist und dazu ausgebildet ist, zum Ausführen sicherheitsbezogener Steuerungsfunktionen auf dem Gebiet der funktionalen Sicherheit sicherheitsbezogene Eingangssignale und/oder sicherheitsbezogene Ausgangssignale zu erzeugen oder auf sicherheitsbezogene Eingangssignale zu reagieren, mit wenigstens einem ersten Mikrocontroller (10) und einem zweiten Mikrocontroller (15) und ein vom sicherheitsgerichteten Gerät getrenntes elektronisches Speichergerät (2, 2', 2", 2‴), in welchem ein erster Dateninhalt und ein zweiter Dateninhalt für das sicherheitsgerichtete Gerät (1, 1', 1", 1‴) gespeichert sind, wobei der erste und zweite Dateninhalt entweder jeweils ein Betriebssoftware-Update oder jeweils eine Adresse sind,
wobei das elektronische Speichergerät (2, 2', 2", 2‴) eine erste Verbindungseinrichtung (3, 3', 3", 3‴) zum mechanischen und elektrischen Koppeln mit dem Gerät (1, 1', 1", 1‴) umfasst, wobei die erste Verbindungseinrichtung (3, 3', 3", 3‴) ein erstes mechanisches Kodierungsmittel (4, 4', 4", 4‴) aufweist, und wobei das Gerät (1, 1', 1", 1‴) eine erste, dem ersten Mikrocontroller (10) zugeordnete Speichereinrichtung (11), in welcher ein erstes Betriebssystem gespeichert ist, eine zweite, dem zweiten Mikrocontroller (15) zugeordnete Speichereinrichtung (16), in welcher ein zweites Betriebssystem gespeichert ist, und eine zweite Verbindungseinrichtung (5, 5', 5", 5‴) zum mechanischen und elektrischen Koppeln mit dem elektronischen Speichergerät (2, 2', 2", 2‴) umfasst, wobei die zweite Verbindungseinrichtung (5, 5', 5", 5‴) ein zweites mechanisches Kodierungsmittel (6, 6', 6", 6‴) aufweist, wobei das erste (4, 4', 4", 4‴) mechanische Kodierungsmittel und das zweite mechanische Kodierungsmittel (6, 6', 6", 6‴) komplementär zueinander ausgebildet sind,
wobei der erste Mikrocontroller (10) des Geräts (1, 1', 1", 1‴) dazu ausgebildet ist zu erkennen, ob das elektronische Speichergerät (2, 2', 2", 2‴) über dessen erste Verbindungseinrichtung (3, 3', 3", 3‴) an der zweiten Verbindungseinrichtung (5, 5', 5", 5‴) des Geräts (1, 1', 1", 1‴) angeschlossen ist, und in diesem Fall ferner dazu ausgebildet ist, den ersten in dem elektronischen Speichergerät (2, 2', 2", 2‴) gespeicherten Dateninhalt von dem elektronischen Speichergerät (2, 2', 2", 2‴) in die erste Speichereinrichtung (11) des Geräts (1, 1', 1", 1‴) herunterzuladen, und wobei der zweite Mikrocontroller (15) des Geräts (1, 1', 1", 1‴) dazu ausgebildet ist zu erkennen, ob das elektronische Speichergerät (2, 2', 2", 2‴) über dessen erste Verbindungseinrichtung (3, 3', 3", 3‴) an der zweiten Verbindungseinrichtung (5, 5', 5", 5‴) des Geräts (1, 1', 1", 1‴) angeschlossen ist, und in diesem Fall ferner dazu ausgebildet ist, den zweiten in dem elektronischen Speichergerät (2, 2', 2", 2‴) gespeicherten Dateninhalt von dem elektronischen Speichergerät (2, 2', 2", 2‴) in die zweite Speichereinrichtung (16) des Geräts (1, 1', 1", 1‴) herunterzuladen, und ferner das elektronische Speichergerät (2, 2', 2", 2‴) eine Dateninhalt-Kennung speichert, welche angibt, ob der erste und der zweite im elektronischen Speichergerät (2, 2', 2", 2‴) gespeicherte Dateninhalt jeweils ein Betriebssoftware-Update oder jeweils eine Adresse für das sicherheitsgerichtete Gerät (1, 1', 1", 1‴) ist, wobei der erste Mikrocontroller (10) dazu ausgebildet ist, für den Fall, dass das elektronische Speichergerät (2, 2', 2", 2‴) über dessen erste Verbindungseinrichtung (3, 3', 3", 3‴) an der zweiten Verbindungseinrichtung (5, 5', 5", 5‴) des Geräts (1, 1', 1", 1‴) angeschlossen ist, zuerst die Dateninhalt-Kennung aus dem elektronischen Speichergerät (2, 2', 2", 2‴) auszulesen und zu interpretieren und anschließend in Abhängigkeit von der interpretierten Dateninhalt-Kennung das jeweilige Betriebssoftware-Update oder die jeweilige Adresse in die erste Speichereinrichtung (11) herunterzuladen, und
der zweite Mikrocontroller (15) dazu ausgebildet ist, für den Fall, dass das elektronische Speichergerät (2, 2', 2", 2‴) über dessen erste Verbindungseinrichtung (3, 3', 3", 3‴) an der zweiten Verbindungseinrichtung (5, 5', 5", 5‴) des Geräts (1, 1', 1", 1‴) angeschlossen ist, zuerst die Dateninhalt-Kennung aus dem elektronischen Speichergerät (2, 2', 2", 2‴) auszulesen und zu interpretieren und anschließend in Abhängigkeit von der interpretierten Dateninhalt-Kennung das jeweilige Betriebssoftware-Update oder die jeweilige Adresse in die zweite Speichereinrichtung (16) herunterzuladen.

4. System gemäß Anspruch 3, **dadurch gekennzeichnet, dass**, falls der erste Dateninhalt und der zweite Dateninhalt jeweils ein Betriebssoftware-Update sind, das elektronische Speichergerät (2, 2', 2", 2‴) eine erste, dem ersten Dateninhalt zugeordnete Betriebssoftware-Updatekennung und eine zweite dem zweiten Dateninhalt zugeordnete Betriebssoftware-Updatekennung speichert, und dass der erste Mikrocontroller (10) dazu ausgebildet ist,
i) nach dem Auslesen und Interpretieren der Dateninhalt-Kennung die erste Betriebssoftware-Updatekennung aus dem elektronischen Speichergerät auszulesen,
ii) unter Ansprechen auf die ausgelesene erste Betriebssoftware-Updatekennung zu prüfen, ob das dazugehörende erste Betriebssoftware-Update in der Speichereinrichtung (11) gespeichert ist, und nur dann, wenn das dazugehörende erste Betriebssoftware-Update nicht in der Speichereinrichtung (11) gespeichert ist, den ersten Dateninhalt in die erste Speichereinrichtung (11) herunterzuladen, und dass
der zweite Mikrocontroller (15) dazu ausgebildet ist,
i) nach dem Auslesen und Interpretieren der Dateninhalt-Kennung die zweite Betriebssoftware-Updatekennung aus dem elektronischen Speichergerät auszulesen,
ii) unter Ansprechen auf die ausgelesene zweite Betriebssoftware-Updatekennung zu prüfen, ob das dazugehörende zweite Betriebssoftware-Update in der Speichereinrichtung (16) gespeichert ist, und nur dann, wenn das dazugehörende zweite Betriebssoftware-Update nicht in der Speichereinrichtung (16) gespeichert ist, den zweiten Dateninhalt in die zweite Speichereinrichtung (16) herunterzuladen.

5. System gemäß einem der vorstehenden Ansprüche, **dadurch gekennzeichnet, dass** das sicherheitsgerichtete Gerät (1, 1', 1", 1‴) einen Sensor (13) aufweist, welcher dazu ausgebildet ist zu erkennen, ob das elektronische Speichergerät (2, 2', 2", 2‴) mit dem Gerät (1, 1', 1", 1‴) korrekt mechanisch gekoppelt ist.

6. System gemäß Anspruch 5, **dadurch gekennzeichnet, dass** der Sensor (13) ein Berührungssensor (13) ist und dazu ausgebildet ist, ein elektrisches Signal an den Mikrocontroller (10) zu senden, welches signalisiert, dass das elektronische Speichergerät (2, 2', 2", 2‴) mit dem Gerät (1, 1', 1", 1‴) korrekt mechanisch gekoppelt ist.

7. System gemäß Anspruch 6 in Verbindung mit einem der vorstehenden Ansprüche 3 bis 5, **dadurch gekennzeichnet, dass** der Berührungssensor (13) dazu ausgebildet ist, ein elektrisches Signal an den zweiten Mikrocontroller (15) zu senden, welches signalisiert, dass das elektronische Speichergerät (2, 2', 2", 2‴) mit dem Gerät (1, 1', 1", 1‴) korrekt mechanisch gekoppelt ist.

8. System gemäß einem der vorstehenden Ansprüche, **dadurch gekennzeichnet, dass** das erste mechanische Kodierungsmittel (4, 4', 4", 4‴) eine erste definierte mechanische Ausgestaltung (7, 7', 7", 7‴) aufweist und das zweite mechanische Kodierungsmittel (6, 6', 6", 6‴) eine zweite definierte mechanische Ausgestaltung (8, 8', 8", 8‴) aufweist, die komplementär zur ersten definierten mechanischen Ausgestaltung (7, 7', 7", 7‴) ist, wobei die erste und zweite definierte mechanische Ausgestaltung (7, 7', 7", 7", 8, 8', 8", 8‴) jeweils zumindest eines der Merkmale einer Riffelung, eines ausgeprägten Musters, eines hervorragenden geometrischen Elements oder einer entsprechenden Ausnehmung aufweist.

9. Verfahren zur Übertragung von nur genau einem Dateninhalt von einem elektronischen Speichergerät (2, 2', 2", 2‴) auf ein sicherheitsgerichtetes Gerät (1, 1', 1", 1‴) innerhalb eines Systems, wobei das sicherheitsgerichtete Gerät (1, 1', 1", 1‴)ein sicherheitsgerichtetes Eingabe-/Ausgabemodul einer Maschine oder Anlage oder eine sicherheitsgerichtete Steuerungseinrichtung einer Maschine oder Anlage ist und zum Ausführen sicherheitsbezogener Steuerungsfunktionen auf dem Gebiet der funktionalen Sicherheit sicherheitsbezogene Eingangssignale und/oder sicherheitsbezogene Ausgangssignale erzeugt oder auf sicherheitsbezogene Eingangssignale reagiert, nach einem der vorstehenden Ansprüche 1 oder 2 mit folgenden Schritten:
- Trennen des Geräts (1, 1', 1", 1‴) von einer Spannungsversorgung,
- elektrisches und mechanisches Koppeln der ersten Verbindungseinrichtung (3, 3', 3", 3‴) des elektronischen Speichergeräts (2, 2', 2", 2‴) mit der zweiten Verbindungseinrichtung (5, 5', 5", 5‴) des Geräts (1, 1', 1", 1‴), wobei eine elektrische Kopplung nur bei korrekter mechanischer Kopplung des ersten mechanischen Kodierungsmittels (4, 4', 4", 4‴) mit dem zweiten mechanischen Kodierungsmittel (6, 6', 6", 6‴) erfolgt,
- Anschließen des Geräts (1, 1', 1", 1‴) an die Spannungsversorgung,
- Erkennen durch den Mikrocontroller (10) des Geräts (1, 1', 1", 1‴), ob das elektronische Speichergerät (2, 2', 2", 2‴) an der zweiten Verbindungseinrichtung (5, 5', 5", 5‴) des Geräts (1, 1', 1", 1‴) angeschlossen ist, und in diesem Fall
- Herunterladen des genau einen in dem elektronischen Speichergerät (2, 2', 2", 2‴) gespeicherten Dateninhalts von dem elektronischen Speichergerät (2, 2', 2", 2‴) in die Speichereinrichtung (11) des Geräts (1, 1', 1", 1‴), wobei das elektronische Speichergerät (2, 2', 2", 2‴) eine Dateninhalt-Kennung speichert, welche angibt, ob der genau eine, im elektronischen Speichergerät (2, 2', 2", 2‴) gespeicherte Dateninhalt ein Betriebssoftware-Update oder eine Adresse für das sicherheitsgerichtete Gerät (1, 1', 1", 1‴) ist, wobei vor dem Herunterladen des genau einen Dateninhalts von dem elektronischen Speichergerät (2, 2', 2", 2‴) in die Speichereinrichtung (11) des Geräts (1, 1', 1", 1‴) die Dateninhalt-Kennung durch den Mikrocontroller (10) aus dem elektronischen Speichergerät (2, 2', 2", 2‴) ausgelesen und interpretiert wird, - elektrisches und mechanisches Entkoppeln des elektronischen Speichergeräts (2, 2', 2", 2‴) von dem Gerät (1, 1', 1", 1‴).

10. Verfahren zur Übertragung von Dateninhalten von einem elektronischen Speichergerät (2, 2', 2", 2‴) auf ein mehrkanalig ausgebildetes sicherheitsgerichtetes Gerät (1, 1', 1", 1‴) innerhalb eines Systems, wobei das sicherheitsgerichtete Gerät (1, 1', 1", 1‴) ein sicherheitsgerichtetes Eingabe-/Ausgabemodul einer Maschine oder Anlage oder eine sicherheitsgerichtete Steuerungseinrichtung einer Maschine oder Anlage ist und zum Ausführen sicherheitsbezogener Steuerungsfunktionen auf dem Gebiet der funktionalen Sicherheit sicherheitsbezogene Eingangssignale und/oder sicherheitsbezogene Ausgangssignale erzeugt oder auf sicherheitsbezogene Eingangssignale reagiert, nach einem der vorstehenden Ansprüche 3 bis 5 mit folgenden Schritten:
- Trennen des Geräts (1, 1', 1", 1‴) von einer Spannungsversorgung,
- elektrisches und mechanisches Koppeln der ersten Verbindungseinrichtung (3, 3', 3", 3‴) des elektronischen Speichergeräts (2, 2', 2", 2‴) mit der zweiten Verbindungseinrichtung (5, 5', 5", 5‴) des Geräts (1, 1', 1", 1‴), wobei eine elektrische Kopplung nur bei korrekter mechanischer Kopplung des ersten mechanischen Kodierungsmittels (4, 4', 4", 4‴) mit dem zweiten mechanischen Kodierungsmittel (6, 6', 6", 6‴) erfolgt,
- Anschließen des Geräts (1, 1', 1", 1‴) an die Spannungsversorgung,
- Erkennen durch den ersten Mikrocontroller (10) des Geräts (1, 1', 1", 1‴), ob das elektronische Speichergerät (2, 2', 2", 2‴) an der zweiten Verbindungseinrichtung (5, 5', 5", 5‴) des Geräts (1, 1', 1", 1‴) angeschlossen ist, und in diesem Fall
- Herunterladen des ersten in dem elektronischen Speichergerät (2, 2', 2", 2‴) gespeicherten Dateninhalts von dem elektronischen Speichergerät (2, 2', 2", 2‴) in die erste Speichereinrichtung (11) des Geräts (1, 1', 1", 1‴), wobei das elektronische Speichergerät (2, 2', 2", 2‴) eine Dateninhalt-Kennung speichert, welche angibt, ob der erste, im elektronischen Speichergerät (2, 2', 2", 2‴) gespeicherte Dateninhalt ein Betriebssoftware-Update oder eine Adresse für das sicherheitsgerichtete Gerät (1, 1', 1", 1‴) ist, wobei vor dem Herunterladen des ersten Dateninhalts von dem elektronischen Speichergerät (2, 2', 2", 2‴) in die Speichereinrichtung (11) des Geräts (1, 1', 1", 1‴) die Dateninhalt-Kennung durch den ersten Mikrocontroller (10) aus dem elektronischen Speichergerät (2, 2', 2", 2‴) ausgelesen und interpretiert wird,
- Erkennen durch den zweiten Mikrocontroller (15) des Geräts (1, 1', 1", 1‴), ob das elektronische Speichergerät (2, 2', 2", 2‴) an der zweiten Verbindungseinrichtung (5, 5', 5", 5' ") des Geräts (1, 1', 1", 1‴) angeschlossen ist, und in diesem Fall
- Herunterladen des zweiten in dem elektronischen Speichergerät (2, 2', 2", 2‴) gespeicherten Dateninhalts von dem elektronischen Speichergerät (2, 2', 2", 2‴) in die zweite Speichereinrichtung (16) des Geräts (1, 1', 1", 1‴), wobei das elektronische Speichergerät (2, 2', 2", 2‴) eine Dateninhalt-Kennung speichert, welche angibt, ob der zweite, im elektronischen Speichergerät (2, 2', 2", 2‴) gespeicherte Dateninhalt ein Betriebssoftware-Update oder eine Adresse für das sicherheitsgerichtete Gerät (1, 1', 1", 1‴) ist, wobei vor dem Herunterladen des zweiten Dateninhalts von dem elektronischen Speichergerät (2, 2', 2", 2‴) in die Speichereinrichtung (11) des Geräts (1, 1', 1", 1‴) die Dateninhalt-Kennung durch den zweiten Mikrocontroller (15) aus dem elektronischen Speichergerät (2, 2', 2", 2‴) ausgelesen und interpretiert wird,
- elektrisches und mechanisches Entkoppeln des elektronischen Speichergeräts (2, 2', 2", 2'") von dem Gerät (1, 1', 1", 1‴).

## Claims

1. A system comprising a safety-related device (1, 1', 1", 1‴) which is a safety-related input/output module of a machine or system or a safety-related control device of a machine or system and is designed to generate safety-related input signals and/or safety-related output signals or to react to safety-related input signals for carrying out safety-related control functions in the field of functional safety, and a separate electronic storage device (2, 2', 2", 2‴) in which only exactly one data content for the safety-related device (1, 1', 1", 1"') is stored, wherein the exactly one data content is either an operating software update or an address,
wherein the electronic storage device (2, 2', 2", 2"') comprises a first connection device (3, 3', 3", 3‴) for mechanically and electrically coupling to the device (1, 1', 1", 1‴), said first connection device (3, 3', 3", 3‴) having a first mechanical encoding device (4, 4', 4", 4‴), and wherein
the device (1, 1', 1", 1‴) comprises a memory device (11) in which an operating system is stored, a microcontroller (10) and a second connection device (5, 5', 5", 5‴) for mechanically and electrically coupling with the electronic memory device (2, 2', 2", 2"'), wherein the second connecting device (5, 5', 5", 5‴) comprises a second mechanical coding device (6, 6', 6", 6‴), wherein the first (4, 4', 4", 4‴) mechanical coding device and the second mechanical coding device (6, 6', 6", 6‴) are complementary to each other,
wherein the microcontroller (10) of the device (1, 1', 1", 1‴) is designed to recognise whether the electronic storage device (2, 2', 2", 2‴) is connected via its first connecting device (3, 3', 3", 3‴) to the second connecting device (5, 5', 5", 5‴) of the device (1, 1', 1", 1‴), and in this case is further designed to download the exact one data content stored in the electronic storage device (2, 2', 2", 2‴) from the electronic storage device (2, 2', 2", 2‴) into the storage device (11) of the device (1, 1', 1", 1‴), and wherein the electronic storage device (2, 2', 2", 2‴) stores a data content identifier which indicates whether the exact one data content stored in the electronic storage device (2, 2', 2", 2"') is an operating software update or an address for the safety-related device (1, 1', 1", 1‴), and
the microcontroller (10) is designed to, in the event that the electronic storage device (2, 2', 2", 2‴) is connected via its first connection device (3, 3', 3", 3‴) to the second connection device (5, 5', 5", 5‴) of the device (1, 1', 1", 1‴), first read out and interprete the data content identifier from the electronic storage device (2, 2', 2", 2‴) and then to download the operating software update or the address into the storage device (11) of the safety-related device (1, 1', 1", 1‴) in dependence of the interpreted data content identifier.

2. The system according to claim 1, **characterized in that**, if the exact one data content is an operating software update, the electronic storage device (2, 2', 2", 2‴) stores an operating software update identifier, and **in that** the microcontroller is designed to,
i) read out, after reading out and interpreting the data content identifier, the operating software update identifier from the electronic storage device,
ii) to check in response to the operating software update identifier read out whether the associated operating software update is stored in the storage device (11) and, only if the associated operating software update is not stored in the storage device, to download the exact one data content into the storage device.

3. A system comprising a multi-channel safety-related device (1, 1', 1", 1‴), which is a safety-related input/output module of a machine or system or a safety-related control device of a machine or system and is designed to generate safety-related input signals and/or safety-related output signals or to react to safety-related input signals in order to perform safety-related control functions in the field of functional safety, having at least a first microcontroller (10) and a second microcontroller (15) and an electronic storage device (2, 2', 2", 2‴) which is separate from the safety-related device and in which a first data content and a second data content for the safety-related device (1, 1', 1", 1‴) are stored, the first and second data content each being either an operating software update or an address,
wherein the electronic storage device (2, 2', 2", 2"') comprises a first connection device (3, 3', 3", 3‴) for mechanically and electrically coupling to the device (1, 1', 1", 1‴), said first connection device (3, 3', 3", 3‴) having a first mechanical encoding device (4, 4', 4", 4‴), and
wherein the device (1, 1', 1", 1"') comprises a first storage device (11) associated with the first microcontroller (10) in which a first operating system is stored, a second storage device (16) associated with the second microcontroller (15) in which a second operating system is stored, and a second connection device (5, 5', 5", 5‴) for mechanically and electrically coupling to the electronic storage device (2, 2', 2", 2"'), wherein the second connecting device (5, 5', 5", 5‴) has a second mechanical coding device (6, 6', 6", 6‴), wherein the first (4, 4', 4", 4‴) mechanical coding device and the second mechanical coding device (6, 6', 6", 6‴) are designed complementarily to one another,
wherein the first microcontroller (10) of the device (1, 1', 1", 1‴) is designed to recognize whether the electronic storage device (2, 2', 2", 2‴) is connected via its first connection device (3, 3', 3", 3‴) to the second connection device (5, 5', 5", 5‴) of the device (1, 1', 1", 1‴), and in this case is further designed to download the first data content stored in the electronic storage device (2, 2', 2", 2‴) from the electronic storage device (2, 2', 2", 2‴) into the first storage device (11) of the device (1, 1', 1", 1‴), and wherein
the second microcontroller (15) of the device (1, 1', 1", 1‴) is designed to recognize whether the electronic storage device (2, 2', 2", 2‴) is connected via its first connection device (3, 3', 3", 3‴) to the second connection device (5, 5', 5", 5‴) of the device (1, 1', 1", 1‴), and in this case is also designed to download the second data content stored in the electronic storage device (2, 2', 2", 2‴) from the electronic storage device (2, 2', 2", 2‴) to the second storage device (16) of the device (1, 1', 1", 1‴), and furthermore the electronic storage device (2, 2', 2", 2‴) stores a data content identifier which indicates whether the first and second data contents stored in the electronic storage device (2, 2', 2", 2‴) are each an operating software update or each an address for the safety-related device (1, 1', 1", 1‴), wherein
the first microcontroller (10) is designed to first read out and interpret the data content identifier from the electronic storage device (2, 2', 2", 2‴) and then to download the respective operating software update or the respective address to the first storage device (11) in dependence of the interpreted data content identifier, in the event that the electronic storage device (2, 2', 2", 2‴) is connected via its first connection device (3, 3', 3", 3"') to the second connection device (5, 5', 5", 5‴) of the device (1, 1', 1", 1‴), and the second microcontroller (15) is designed to, in the event that the electronic storage device (2, 2', 2", 2‴) is connected via its first connection device (3, 3', 3", 3‴) to the second connection device (5, 5', 5", 5‴) of the device (1, 1', 1", 1‴), first read out and interpret the data content identifier from the electronic storage device (2, 2', 2", 2‴) and then to download the respective operating software update or the respective address to the second storage device (16) in dependence of the interpreted data content identifier.

4. The system according to claim 3, **characterized in that**, if the first data content and the second data content are each an operating software update, the electronic storage device (2, 2', 2", 2‴) stores a first operating software update identifier assigned to the first data content and a second operating software update identifier assigned to the second data content, and **in that** the first microcontroller (10) is designed,
i) to read out the first operating software update identifier from the electronic storage device after reading and interpreting the data content identifier,
ii) to check in response to the first operating software update identifier read out whether the associated first operating software update is stored in the storage device (11) and, only if the associated first operating software update is not stored in the memory device (11), to download the first data content into the first storage device (11), and **in that** the second microcontroller (15) is designed,
i) to read out the second operating software update identifier from the electronic storage device after reading and interpreting the data content identifier,
ii) to check in response to the second operating software update identifier read out whether the associated second operating software update is stored in the storage device (16), and only then, if the associated second operating software update is not stored in the storage device (16), to download the second data content into the second storage device (16).

5. The system according to one of the preceding claims, **characterized in that** the safety-related device (1, 1', 1", 1"') has a sensor (13) which is designed to detect whether the electronic storage device (2, 2', 2", 2‴) is correctly mechanically coupled to the device (1, 1', 1", 1‴).

6. The system according to claim 5, **characterized in that** the sensor (13) is a touch sensor (13) and is designed to send an electrical signal to the microcontroller (10), which signals that the electronic storage device (2, 2', 2", 2‴) is correctly mechanically coupled to the device (1, 1', 1", 1‴).

7. The system according to claim 6 in conjunction with one of the preceding claims 3 to 5, **characterized in that** the touch sensor (13) is designed to send an electrical signal to the second microcontroller (15), which signals that the electronic storage device (2, 2', 2", 2‴) is correctly mechanically coupled to the device (1, 1', 1", 1"').

8. The system according to one of the preceding claims, **characterized in that** the first mechanical coding device (4, 4', 4", 4"') has a first defined mechanical configuration (7, 7', 7", 7‴) and the second mechanical coding device (6, 6', 6", 6"') has a second defined mechanical configuration (8, 8', 8", 8‴), which is complementary to the first defined mechanical configuration (7, 7', 7", 7‴, wherein the first and second defined mechanical configurations (7, 7', 7", 7‴ 8, 8', 8", 8‴) each have at least one of the features of a corrugation, a pronounced pattern, an outstanding geometric element or a corresponding recess.

9. A method for transferring only exactly one data content from an electronic storage device (2, 2', 2", 2‴) to a safety-related device (1, 1', 1", 1"') within a system, wherein the safety-related device (1, 1', 1", 1‴) is a safety-related input/output module of a machine or system or a safety-related control device of a machine or system and generates safety-related input signals and/or safety-related output signals or reacts to safety-related input signals for executing safety-related control functions in the field of functional safety, according to one of the preceding claims 1 or 2, the method comprising the following steps:
- Disconnecting the device (1, 1', 1", 1‴) from a power supply,
- electrical and mechanical coupling of the first connection device (3, 3', 3", 3‴) of the electronic storage device (2, 2', 2", 2‴) to the second connection device (5, 5', 5", 5‴) of the device (1, 1', 1", 1‴), wherein an electrical coupling only takes place when the first mechanical coding device (4, 4', 4", 4‴: is correctly mechanically coupled to the second mechanical coding device (6, 6', 6", 6‴),
- connecting the device (1, 1', 1", 1"') to the power supply,
- detecting by the microcontroller (10) of the device (1, 1', 1", 1‴) whether the electronic storage device (2, 2', 2", 2‴) is connected to the second connection device (5, 5', 5", 5"') of the device (1, 1', 1", 1‴), and in this case
- downloading the exact one data content stored in the electronic storage device (2, 2', 2", 2‴) from the electronic storage device (2, 2', 2", 2‴) to the storage device (11) of the device (1, 1', 1", 1‴), wherein the electronic storage device (2, 2', 2", 2"') stores a data content identifier which indicates whether the exact one data content stored in the electronic storage device (2, 2', 2", 2‴) is an operating software-update or an address of the safety-related device (1, 1', 1", 1‴), wherein prior to downloading the exactly one data content from the electronic storage device (2, 2', 2", 2‴) into the storage device (11) of the device (1, 1', 1", 1‴), the data content identifier is read out and interpreted by the microcontroller (10) from the electronic storage device (2, 2', 2", 2"'),
- electrically and mechanically decoupling the electronic storage device (2, 2', 2", 2‴) from the device (1, 1', 1", 1‴).

10. A method for transferring data content from an electronic storage device (2, 2', 2", 2"') to a multi-channel safety-related device (1, 1', 1", 1"') within a system, wherein the safety-related device (1, 1', 1", 1‴) is a safety-related input/output module of a machine or system or a safety-related control device of a machine or system and generates safety-related input signals and/or safety-related output signals or reacts to safety-related input signals for executing safety-related control functions in the field of functional safety, according to one of the preceding claims 3 to 5, the method comprising the following steps:
- Disconnecting the device (1, 1', 1", 1‴) from a power supply,
- electrical and mechanical coupling of the first connection device (3, 3', 3", 3‴) of the electronic storage device (2, 2', 2", 2‴) to the second connection device (5, 5', 5", 5‴) of the device (1, 1', 1", 1‴), wherein an electrical coupling only takes place when the first mechanical coding device (4, 4', 4", 4‴: is correctly mechanically coupled to the second mechanical coding device (6, 6', 6", 6‴),
- connecting the device (1, 1', 1", 1"') to the power supply,
- detecting by the first microcontroller (10) of the device (1, 1', 1", 1‴) whether the electronic storage device (2, 2', 2", 2‴) is connected to the second connection device (5, 5', 5", 5‴) of the device (1, 1', 1", 1‴), and in this case
- downloading the first data content stored in the electronic storage device (2, 2', 2", 2"') from the electronic storage device (2, 2', 2", 2‴) to the first storage device **(11)** of the device (1, 1', 1", 1‴), wherein the electronic storage device (2, 2', 2", 2"') stores a data content identifier indicating whether the first data content stored in the electronic storage device (2, 2', 2", 2‴) is an operating software update or an address for the safety-related appliance (1, 1', 1", 1‴), wherein prior to downloading the first data content from the electronic storage device (2, 2', 2", 2‴) into the storage device (11) of the device (1, 1', 1", 1‴), the data content identifier is read out from the electronic storage device (2, 2', 2", 2‴) and interpreted by the first microcontroller (10),
- recognizing by the second microcontroller (15) of the device (1, 1', 1", 1"') whether the electronic storage device (2, 2', 2", 2‴) is connected to the second connection device (5, 5', 5", 5‴) of the device (1, 1', 1", 1‴), and in this case
- downloading the second data content stored in the electronic storage device (2, 2', 2", 2‴) from the electronic storage device (2, 2', 2", 2‴) to the second storage device (16) of the device (1, 1', 1", 1‴), wherein the electronic storage device (2, 2', 2", 2"') stores a data content identifier indicating whether the second data content stored in the electronic storage device (2, 2', 2", 2‴) is an operating software update or an address for the safety-related appliance (1, 1', 1", 1‴), wherein prior to downloading the second data content from the electronic storage device (2, 2', 2", 2‴) into the memory device (11) of the appliance (1, 1', 1", 1‴), the data content identifier is read out from the electronic memory device (2, 2', 2", 2‴) and interpreted by the second microcontroller (15),
- electrically and mechanically decoupling the electronic storage device (2, 2', 2", 2‴) from the device (1, 1', 1", 1‴).

## Revendications

1. Système comprenant un appareil (1, 1', 1", 1‴) sécurisé, lequel est un module d'entrée / de sortie sécurisé d'une machine ou d'une installation ou un dispositif de commande sécurisé d'une machine ou d'une installation et lequel est conçu pour générer des signaux d'entrée relatifs à la sécurité et/ou des signaux de sortie relatifs à la sécurité ou pour réagir à des signaux d'entrée relatifs à la sécurité pour exécuter des fonctions de commande relatives à la sécurité dans le domaine de la sécurité fonctionnelle, et un dispositif de stockage (2, 2', 2", 2"') électronique séparé de celui-ci, dans lequel n'est mémorisé qu'un seul contenu de données pour l'appareil (1, 1', 1", 1‴) sécurisé, ledit contenu de données étant une mise à jour du logiciel d'exploitation ou une adresse,
dans lequel le dispositif de stockage (2, 2', 2", 2"') électronique comprend une première unité de liaison (3, 3', 3", 3‴) pour un accouplement mécanique et électrique à l'appareil (1, 1', 1", 1"'), dans lequel la première unité de liaison (3, 3', 3", 3‴) comprend une première unité de codage (4, 4', 4", 4"') mécanique, et dans lequel l'appareil (1, 1', 1", 1‴) comprend un dispositif mémoire (11) dans lequel est mémorisé un système d'exploitation, un microcontrôleur (10) et une seconde unité de connexion (5, 5', 5", 5"') pour l'accouplement mécanique et électrique au dispositif de stockage (2, 2', 2", 2"') électronique, dans lequel la seconde unité de connexion (5, 5', 5", 5"') comprend une seconde unité de chiffrement (6, 6', 6", 6‴) mécanique, dans lequel la première unité de chiffrement (4, 4', 4", 4"') mécanique et la seconde unité de chiffrement (6, 6', 6", 6"') mécanique sont complémentaires l'une avec l'autre,
dans lequel le microcontrôleur (10) de l'appareil (1, 1', 1", 1‴) est conçu pour détecter si le dispositif de stockage (2, 2', 2", 2‴) électronique est connecté, par l'intermédiaire de sa première unité de connexion (3, 3', 3", 3"'), à la seconde unité de connexion (5, 5', 5", 5‴) de l'appareil (1, 1', 1", 1‴) et, dans ce cas, est en outre conçu pour télécharger ledit contenu de données mémorisé dans le dispositif de stockage (2, 2', 2", 2‴) électronique à partir du dispositif de stockage (2, 2', 2", 2"') électronique dans le dispositif mémoire (11) de l'appareil (1, 1', 1", 1"'), et dans lequel
le dispositif de stockage (2, 2', 2", 2"') électronique mémorise un identifiant de contenu de données, lequel indique si ledit contenu de données mémorisé dans le dispositif de stockage (2, 2', 2", 2"') électronique est la mise à jour du logiciel d'exploitation ou l'adresse pour l'appareil (1, 1', 1", 1‴) sécurisé, et
le microcontrôleur (10) est conçu, dans le cas où le dispositif de stockage (2, 2', 2", 2"') électronique est connecté, par l'intermédiaire de sa première unité de liaison (3, 3', 3", 3‴), à la seconde unité de connexion (5, 5', 5", 5‴) de l'appareil (1, 1', 1", 1‴) , d'abord pour lire et pour interpréter l'identifiant de contenu de données à partir du dispositif de stockage (2, 2', 2", 2"') électronique et ensuite pour télécharger la mise à jour du logiciel d'exploitation ou l'adresse dans le dispositif mémoire (11) de l'appareil (1, 1', 1", 1‴) sécurisé en fonction de l'identifiant de contenu de données interprété.

2. Système selon la revendication 1, **caractérisé en ce que**, lorsque ledit contenu de données est la mise à jour du logiciel d'exploitation, le dispositif de stockage (2, 2', 2", 2‴) électronique mémorise un identifiant de mise à jour du logiciel d'exploitation, et **en ce que** le microcontrôleur est conçu
i) pour lire, après la lecture et l'interprétation de l'identifiant de contenu de données, l'identifiant de mise à jour du logiciel d'exploitation à partir du dispositif de stockage électronique,
ii) pour vérifier, en réponse à l'identifiant de mise à jour du logiciel d'exploitation lu, si la mise à jour du logiciel d'exploitation correspondante est mémorisée dans l'unité mémoire (11) et, uniquement dans ce cas, lorsque la mise à jour du logiciel d'exploitation correspondante n'est pas mémorisée dans le dispositif mémoire, pour télécharger ledit contenu de données dans le dispositif mémoire.

3. Système comprenant l'appareil (1, 1', 1", 1‴) sécurisé conçu à plusieurs canaux, lequel est un module d'entrée / de sortie sécurisé d'une machine ou d'une installation ou le dispositif de commande sécurisé d'une machine ou d'une installation et conçu pour générer les signaux d'entrée relatifs à la sécurité et/ou les signaux de sortie relatifs à la sécurité ou pour réagir aux signaux d'entrée relatifs à la sécurité pour exécuter les fonctions de commande relatives à la sécurité dans le domaine de la sécurité fonctionnelle, comportant au moins un premier microcontrôleur (10) et un second microcontrôleur (15) et un dispositif de stockage (2, 2', 2", 2‴) électronique séparé de l'appareil sécurisé, dans lequel sont mémorisés un premier contenu de données et un second contenu de données pour l'appareil sécurisé (1, 1', 1", 1"'), le premier et le second contenu de données étant respectivement une mise à jour du logiciel d'exploitation ou respectivement une adresse,
dans lequel le dispositif de stockage (2, 2', 2", 2"') électronique comprend la première unité de connexion (3, 3', 3", 3"') pour le couplage mécanique et électrique à l'appareil (1, 1', 1", 1"'), la première unité de connexion (3, 3', 3", 3‴) comprenant la première unité de codage (4, 4', 4", 4"') mécanique, et l'appareil (1, 1', 1", 1"') comprenant le premier dispositif mémoire (11) associé au premier microcontrôleur (10), dans lequel est mémorisé un premier système d'exploitation, un second dispositif mémoire (16) associé au second microcontrôleur (15), dans lequel est mémorisé le second système d'exploitation, et une seconde unité de connexion (5, 5', 5", 5"') pour le couplage mécanique et électrique au dispositif de stockage (2, 2', 2", 2"') électronique, dans lequel la seconde unité de connexion (5, 5', 5", 5‴) comprend la seconde unité de codage (6, 6', 6", 6"') mécanique, dans lequel la première unité de codage (4, 4', 4", 4"') mécanique et la seconde unité de codage (6, 6', 6", 6"') mécanique sont complémentaires,
dans lequel le premier microcontrôleur (10) de l'appareil (1, 1', 1", 1"') est conçu pour détecter si le dispositif de stockage (2, 2', 2", 2"') électronique est connecté, par l'intermédiaire de sa première unité de connexion (3, 3', 3", 3"'), à la seconde unité de connexion (5, 5', 5", 5‴) de l'appareil (1, 1', 1", 1"'), et dans ce cas, est en outre conçu pour télécharger le premier contenu de données mémorisé dans le dispositif de stockage (2, 2', 2", 2"') électronique à partir du dispositif de stockage (2, 2', 2", 2"') électronique vers le premier dispositif mémoire (11) de l'appareil (1, 1', 1", 1‴), et dans lequel le second microcontrôleur (15) de l'appareil (1, 1', 1", 1‴) est conçu pour détecter si le dispositif de stockage (2, 2', 2", 2"') électronique est connecté, par l'intermédiaire de sa première unité de connexion (3, 3', 3", 3‴), à la seconde unité de connexion (5, 5', 5", 5‴) de l'appareil (1, 1', 1", 1"'), et dans ce cas, est en outre conçu pour télécharger le second contenu de données mémorisé dans le dispositif de stockage (2, 2', 2", 2"') électronique du dispositif de stockage (2, 2', 2", 2‴) électronique dans le second dispositif de stockage (16) de l'appareil (1, 1', 1", 1‴), et en outre le dispositif de stockage (2, 2', 2", 2"') électronique mémorise l'identifiant de contenu de données, lequel indique si le premier et le second contenu de données mémorisés dans le dispositif de stockage (2, 2', 2", 2"') électronique sont respectivement une mise à jour du logiciel d'exploitation ou respectivement une adresse pour l'appareil (1, 1', 1", 1‴) sécurisé, dans lequel
le premier microcontrôleur (10) est conçu, dans le cas où le dispositif de stockage (2, 2', 2", 2‴) électronique est connecté, par l'intermédiaire de sa première unité de connexion (3, 3', 3", 3‴), à la seconde unité de connexion (5, 5', 5", 5"') de l'appareil (1, 1', 1", 1"'), d'abord pour lire et pour interpréter l'identifiant de contenu de données à partir du dispositif de stockage (2, 2', 2", 2"') électronique et ensuite pour télécharger, en fonction de l'identifiant de contenu de données interprété, la mise à jour respective du logiciel d'exploitation ou l'adresse respective dans le premier dispositif mémoire (11), et
le second microcontrôleur (15) est conçu pour, dans le cas où le dispositif de stockage (2, 2', 2", 2"') électronique est connecté, par l'intermédiaire de sa première unité de connexion (3, 3', 3", 3‴), à la seconde unité de connexion (5, 5', 5", 5"') de l'appareil (1, 1', 1", 1‴), d'abord pour lire et pour interpréter l'identifiant de contenu de données à partir du dispositif de stockage (2, 2', 2", 2"') électronique et ensuite pour télécharger la mise à jour respective du logiciel d'exploitation ou l'adresse respective dans le second dispositif mémoire (16) en fonction de l'identifiant de contenu de données interprété.

4. Système selon la revendication 3, **caractérisé en ce que**, lorsque le premier contenu de données et le second contenu de données sont respectivement la mise à jour du logiciel d'exploitation, le dispositif de stockage (2, 2', 2", 2‴) électronique mémorise un premier identifiant de mise à jour du logiciel d'exploitation associé au premier contenu de données et un second identifiant de mise à jour du logiciel d'exploitation associé au second contenu de données, et **en ce que** le premier microcontrôleur (10) est conçu
i) pour lire, après la lecture et l'interprétation de l'identifiant de contenu de données, le premier identifiant de mise à jour du logiciel d'exploitation à partir du dispositif de stockage électronique,
ii) pour vérifier, en réponse au premier identifiant de mise à jour du logiciel d'exploitation lu, si la première mise à jour du logiciel d'exploitation correspondante est mémorisée dans le dispositif mémoire (11), et uniquement dans ce cas, lorsque la première mise à jour du logiciel d'exploitation correspondante n'est pas mémorisée dans le dispositif mémoire (11), pour télécharger le premier contenu de données dans le premier dispositif mémoire (11), et **en ce que** le second microcontrôleur (15) est conçu
i) pour lire, après la lecture et l'interprétation de l'identifiant de contenu de données, le second identifiant de mise à jour du logiciel d'exploitation à partir du dispositif de stockage électronique,
ii) pour vérifier, en réponse au second identifiant de mise à jour du logiciel d'exploitation lu, si la seconde mise à jour du logiciel d'exploitation correspondante est mémorisée dans le dispositif mémoire (16), et uniquement dans ce cas, lorsque la seconde mise à jour du logiciel d'exploitation correspondante n'est pas mémorisée dans le dispositif mémoire (16), pour télécharger le second contenu de données dans le second dispositif mémoire (16).

5. Système selon l'une quelconque des revendications précédentes, **caractérisé en ce que** l'appareil (1, 1', 1", 1"') sécurisé comprend un capteur (13) conçu pour détecter si le dispositif de stockage (2, 2', 2", 2"') électronique est correctement accouplé mécaniquement à l'appareil (1, 1', 1", 1"').

6. Système selon la revendication 5, **caractérisé en ce que** le capteur (13) est un capteur (13) tactile et est conçu pour envoyer un signal électrique au microcontrôleur (10), lequel signale que le dispositif de stockage (2, 2', 2", 2"') électronique est correctement accouplé mécaniquement à l'appareil (1, 1', 1", 1‴).

7. Système selon la revendication 6 en combinaison avec l'une quelconque des revendications 3 à 5 précédentes, **caractérisé en ce que** le capteur (13) tactile est conçu pour envoyer un signal électrique au second microcontrôleur (15), lequel signale que le dispositif de stockage (2, 2', 2", 2‴) électronique est correctement accouplé mécaniquement à l'appareil (1, 1', 1", 1‴).

8. Système selon l'une quelconque des revendications précédentes, **caractérisé en ce que** la première unité de codage (4, 4', 4", 4"') mécanique comprend une première structure (7, 7', 7", 7‴) mécanique définie et la seconde unité de codage (6, 6', 6", 6"') mécanique comprend une seconde structure (8, 8', 8", 8‴) mécanique définie, qui est complémentaire à la première structure (7, 7', 7", 7‴) mécanique définie, les première et seconde structures (7, 7', 7", 7‴, 8, 8', 8", 8‴) mécaniques définies présentant respectivement les caractéristiques d'une cannelure et/ou d'un motif estampé et/ou d'un élément géométrique en saillie et/ou d'un évidement correspondant.

9. Procédé de transmission d'un contenu de données d'un dispositif de stockage (2, 2', 2", 2"') électronique à un appareil (1, 1', 1", 1‴) sécurisé dans un système, dans lequel l'appareil (1, 1', 1", 1"') sécurisé est un module d'entrée / de sortie sécurisé d'une machine ou d'une installation ou un dispositif de commande sécurisé d'une machine ou d'une installation et, pour exécuter des fonctions de commande relatives à la sécurité dans le domaine de la sécurité fonctionnelle, génère des signaux d'entrée relatifs à la sécurité et/ou
des signaux de sortie relatifs à la sécurité ou réagit aux signaux d'entrée relatifs à la sécurité, selon l'une quelconque des revendications 1 ou 2 précédentes, comportant
les étapes suivantes :
- la déconnexion de l'appareil (1, 1', 1", 1"') d'une alimentation électrique,
- l'accouplement électrique et mécanique d'une première unité de connexion (3, 3', 3", 3"') du dispositif de stockage (2, 2', 2", 2"') électronique à la seconde unité de connexion (5, 5', 5", 5"') de l'appareil (1, 1', 1", 1"'), dans lequel l'accouplement électrique n'est réalisé que lorsque l'accouplement mécanique d'une première unité de codage (4, 4', 4", 4"') mécanique à une seconde unité de codage (6, 6', 6", 6"') mécanique est correct,
- le raccordement de l'appareil (1, 1', 1", 1‴) à l'alimentation électrique,
- la détection par le microcontrôleur (10) de l'appareil (1, 1', 1", 1"') si le dispositif de stockage (2, 2', 2", 2‴) électronique est connecté à une seconde unité de connexion (5, 5', 5", 5"') de l'appareil (1, 1', 1", 1‴), et dans ce cas,
- le téléchargement dudit contenu de données mémorisé dans le dispositif de stockage (2, 2', 2", 2‴) électronique du dispositif de stockage (2, 2', 2", 2"') électronique dans le dispositif mémoire (11) de l'appareil (1, 1', 1", 1"'), dans lequel le dispositif de stockage (2, 2', 2", 2‴) électronique mémorise un identifiant de données, lequel indique si ledit contenu de données mémorisé dans le dispositif de stockage (2, 2', 2", 2"') électronique est une mise à jour du logiciel d'exploitation ou une adresse pour l'appareil (1, 1', 1", 1"') sécurisé, dans lequel, avant le téléchargement dudit contenu de données du dispositif de stockage (2, 2', 2", 2‴) électronique dans le dispositif mémoire (11) de l'appareil (1, 1', 1", 1‴), l'identifiant de contenu de données est lu et interprété par le microcontrôleur (10) à partir du dispositif de stockage (2, 2', 2", 2‴) électronique, le désaccouplement électrique et mécanique du dispositif de stockage (2, 2', 2", 2"') électronique de l'appareil (1, 1', 1", 1‴).

10. Procédé de transmission des contenus de données du dispositif de stockage (2, 2', 2", 2‴) électronique à l'appareil (1, 1', 1", 1‴) sécurisé et conçu à plusieurs canaux dans un système, dans lequel l'appareil (1, 1', 1", 1"') relatif à la sécurité est le module d'entrée / de sortie relatif à la sécurité d'une machine ou d'une installation ou le dispositif de commande sécurisé d'une machine ou d'une installation et, pour exécuter des fonctions de commande relatives à la sécurité dans le domaine de la sécurité fonctionnelle, génère des signaux d'entrée relatifs à la sécurité et/ou des signaux de sortie relatifs à la sécurité ou réagit aux signaux d'entrée relatifs à la sécurité, selon l'une quelconque des revendications 3 à 5 précédentes, comportant les étapes suivantes :
- la déconnexion de l'appareil (1, 1', 1", 1"') d'une alimentation électrique,
- l'accouplement électrique et mécanique d'une première unité de connexion (3, 3', 3", 3"') du dispositif de stockage (2, 2', 2", 2"') électronique à la seconde unité de connexion (5, 5', 5", 5"') de l'appareil (1, 1', 1", 1"'), dans lequel l'accouplement électrique n'est réalisé que lorsque l'accouplement mécanique d'une première unité de codage (4, 4', 4", 4"') mécanique à une seconde unité de codage (6, 6', 6", 6"') mécanique est correct,
- le raccordement de l'appareil (1, 1', 1", 1‴) à l'alimentation électrique,
- la détection par le premier microcontrôleur (10) de l'appareil (1, 1', 1", 1‴) si le dispositif de stockage (2, 2', 2", 2"') électronique est connecté à une seconde unité de connexion (5, 5', 5", 5‴) de l'appareil (1, 1', 1", 1‴), et dans ce cas,
- le téléchargement du premier contenu de données mémorisé dans le dispositif de stockage (2, 2', 2", 2"') électronique à partir du dispositif de stockage (2, 2', 2", 2‴) électronique dans le premier dispositif mémoire (11) de l'appareil (1, 1', 1", 1‴), dans lequel le dispositif de stockage (2, 2', 2", 2‴) électronique mémorise un identifiant de données, lequel indique si le premier contenu de données mémorisé dans le dispositif de stockage (2, 2', 2", 2"') électronique est une mise à jour du logiciel d'exploitation ou une adresse pour l'appareil (1, 1', 1", 1"') sécurisé, dans lequel, avant le téléchargement du premier contenu de données à partir du dispositif de stockage (2, 2', 2", 2‴) électronique dans le dispositif mémoire (11) de l'appareil (1, 1', 1", 1"'), l'identifiant de contenu de données est lue et interprétée par le premier microcontrôleur (10) à partir du dispositif de stockage (2, 2', 2", 2"'),
- la détection par le second microcontrôleur (15) de l'appareil (1, 1', 1", 1"') si le dispositif de stockage (2, 2', 2", 2‴) électronique est connecté à une seconde unité de connexion (5, 5', 5", 5"') de l'appareil (1, 1', 1", 1‴), et dans ce cas,
- le téléchargement du second contenu de données mémorisé dans le dispositif de stockage (2, 2', 2", 2"') électronique à partir du dispositif de stockage (2, 2', 2", 2‴) électronique dans le second dispositif mémoire (16) de l'appareil (1, 1', 1", 1"'), dans lequel le dispositif de stockage (2, 2', 2", 2‴) électronique mémorise un identifiant de données, lequel indique si le second contenu de données mémorisé dans le dispositif de stockage (2, 2', 2", 2"') électronique est une mise à jour du logiciel d'exploitation ou une adresse pour l'appareil (1, 1', 1", 1‴) sécurisé, dans lequel, avant le téléchargement du second contenu de données à partir du dispositif de stockage (2, 2', 2", 2‴) électronique dans le dispositif mémoire (11) de l'appareil (1, 1', 1", 1"'), l'identifiant de contenu de données est lu et interprété par le second microcontrôleur (15) à partir du dispositif de stockage (2, 2', 2", 2‴) électronique,
- le désaccouplement électrique et mécanique du dispositif de stockage (2, 2', 2", 2"') électronique de l'appareil (1, 1', 1", 1"').
